(19) Europäisches Patentamt

European Patent Office

Office européen des brevets

(11) **EP 1 325 574 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(21) Anmeldenummer: **01986813.2**

(22) Anmeldetag: **18.09.2001**

(51) Int Cl.:
**H04B 10/18** (2006.01)

(86) Internationale Anmeldenummer:
**PCT/EP2001/010794**

(87) Internationale Veröffentlichungsnummer:
**WO 2002/032023 (18.04.2002 Gazette 2002/16)**

(54) **PMD-EMULATIONS-, MESS- UND KOMPENSATIONSVORRICHTUNG**

PMD -EMULATION, MEASUREMENT AND COMPENSATING DEVICE

DISPOSITIF D'EMULATION PMD, DE MESURE ET DE COMPENSATION

(84) Benannte Vertragsstaaten:
**DE FR GB IT**

(30) Priorität: **09.10.2000 DE 10049784**
**28.10.2000 WOPCT/DE00/03809**

(43) Veröffentlichungstag der Anmeldung:
**09.07.2003 Patentblatt 2003/28**

(73) Patentinhaber: **THORLABS GmbH**
**85757 Karlsfeld (DE)**

(72) Erfinder:
• **KRAUSE, Egbert**
**09217 Burgstädt (DE)**

• **BANDEMER, Adalbert Dr.**
**85757 Karlsfeld (DE)**

(74) Vertreter: **Schurack, Eduard F.**
**Hofstetter, Schurack & Skora**
**Balanstrasse 57**
**81541 München (DE)**

(56) Entgegenhaltungen:
**EP-A- 1 109 338          WO-A-01/86333**
**DE-A- 19 816 178        DE-A- 19 830 990**

## Beschreibung

Die Erfindung bezieht sich auf eine Emulationsvorrichtung zur Emulation einer Polarisationsmodendispersion (PMD) eines optischen Übertragungssystems gemäß Anspruch 1 und eine Kompensationsvorrichtung unter Verwendung einer derartigen Emulationsvorrichtung gemäß Anspruch 15 oder 21.

Zur Übertragung digitaler Datenströme mit hoher Bandbreite wurden im letzten Jahrzehnt zunehmend Lichtwellenleiter LWL (Glasfasern) eingesetzt. Wenn eine Datenübertragung über eine lange Übertragungsstrecke realisiert werden soll, kommen hierbei typischerweise sogenannte Monomode-Lichtwellenleiter (single mode fibers; SMF) mit geringen Absorptionskoeffizienten zum Einsatz. In Folge der Polarisation elektromagnetischer. Strahlung besteht die Grundmode eines solchen Monomode-LWL (nachfolgend kurz SMF) jeweils aus zwei Moden, deren Eigenwellen orthogonal zueinander schwingen. Folglich breiten sich in einer SMF zwei Polarisationsmoden aus.

Problematisch ist hierbei, daß die Lichtwellenleiter herstellungsbedingt niemals vollständig isotrop sind, sondern eine schwache, insbesondere geometrisch verursachte Doppelbrechung aufweisen können. So führt eine Änderung der geometrischen Abmessung eines Kerns einer SMF von einem idealen kreisförmigen zu einem elliptischen Querschnitt dazu, daß sich die effektiven Brechzahlen entlang der Ellipsenhalbachsen voneinander unterscheiden. Auch mechanische Spannungen können in einem runden Querschnitt zu einer richtungsabhängigen Brechzahl führen.

Die beiden Propagationsmoden (d.h. Polarisationsmoden) in der SMF haben in diesem Fall verschiedene Gruppengeschwindigkeiten, so daß die Phasendifferenz zwischen den orthogonalen Moden nicht konstant bleibt. Diese Änderung der Phasendifferenz führt zu einer Änderung des Polarisationszustandes des optischen Signals. Ferner existiert eine starke Kopplung zwischen den Polarisationsmoden der SMF, so daß der Einfluß der Doppelbrechung in der SMF statistischen Schwankungen unterliegt. Auch mechanische Einflüsse, wie geringfügige Krümmungen der SMF oder Vibrationen sowie Temperaturänderungen bewirken Änderungen der Doppelbrechung.

Als Folge der unterschiedlichen Gruppengeschwindigkeiten der beiden orthogonal zueinander schwingenden Eigenmoden der SMF ergibt sich die sogenannte Polarisationsmodendispersion (PMD). Die Laufzeitverzögerung zwischen den beiden Teilmoden wird als differentielle Gruppenlaufzeit (differential group delay; DGD) bezeichnet. Ihr Mittelwert wird PMD-Verzögerung (PMD-delay) genannt und durch den PMD-Verzögerungskoeffizienten (PMD-delay-coeffizient; Einheit: $ps/km^{1/2}$) ausgedrückt. Folglich wächst die Polarisationsmodendispersion mit der Wurzel der Übertragungsstreckenlänge. Moderne SMF mit minimiertem PMD-Verzögerungskoeffizienten werden heute mit weniger als $(0,1$ bis $0,5)$ $ps/km^{1/2}$ spezifiziert.

Die unter Datenverlust-Gesichtspunkten reatisierbare Übertragungsstrecke ist umgekehrt proportional zum Quadrat der Bitrate und zum Quadrat des PMD-Verzögerungskoeffizienten, welcher ein Parameter der SMF ist. Während die PMD bei LWL-Übertragungssystemen mit einer Übertragungsrate von 2,5 Gbit/s noch einen verhältnismäßig kleinen störenden Einfluß darstellte, so ist sie bei modernen 10 Gbit/s -Systemen und insbesondere bei zukünftigen 40 Gbit/s - Systemen ein emstzunehmendes Problem, welches die Bitfehlerrate nachhaltig beeinflußt.

Hinzukommt, daß die PMD eines optischen Übertragungssystems eine ausgeprägte Wellenlängenabhängigkeit (PMD zweiter Ordnung; SOPMD, PMD2) aufweist. Da in modernen Lichtwellenleiterübertragungssystemen eine Übertragung einer Vielzahl sogenannter Kanäle mit unterschiedlichen optischen Wellenlängen durch eine SMF erfolgt, ist bei jedem Kanal (d.h. bei jeder Wellenlänge) eine unterschiedliche, zu Signalverzerrungen führende PMD vorhanden.

Die Verzerrungen in optischen Transmissionssystemen, die durch PMD erzeugt werden, müssen für hochratige Datenübertragungen kompensiert werden, um die Signalqualität zu erhalten bzw. die Bitfehlerrate zu minimieren.

Hierzu wurden adaptive PMD-Kompensatoren vorgeschlagen, die beispielsweise empfängerseitig in das optische Übertragungssystem eingefügt werden, um den signalverzerrenden Einfluß der PMD der Übertragungsstrecke zu minimieren bzw. zu kompensieren. Aus der Literatur sind verschiedene Lösungsansätze zur PMD-Kompensation bekannt. Insbesondere wurden elektronische Signalaufbereiter vorgeschlagen, welche auf elektronischer Ebene nach einer optoelektrischen Konversion des optischen Übertragungssignals eine PMD-Kompensation durchführen. Es hat sich jedoch gezeigt, daß die Korrektur des "optischen Problems" auf elektronischer Ebene nur begrenzt erfolgversprechend ist.

Vielversprechender ist eine Korrektur des PMD-verzerrten Signals auf optischer Ebene. Anknüpfungspunkt für einen derartigen PMD-Kompensator ist die DGD und die Polarisationshauptzustände (die sogenannten "Principle States of Polarization", nachfolgend kurz als PSP bezeichnet) am Ausgang des Übertragungssystems bei der Mittenwellenlänge $\lambda_0$ des optischen Signals. Die Aufgabe des PMD-Kompensators (kurz PMDC) ist es, die PMD der Übertragungsstrecke kontinuierlich zu messen und auf Basis der ermittelten PMD eine "Kompensationsstrecke" mit einer derartigen PMD-Übertragungseigenschaft zu emulieren, daß das optische Signal nach dem Durchlaufen dieser "Kompensationsstrecke " (d.h. des Emulators) "entzerrt" bzw. wiederhergestellt ist. Vorteilhaft findet die Messung der PMD bedingten Verzerrungen nach Durchlaufen der Kompensationsstrecke statt. Es wird somit die PMD erfaßt, die noch unkompensiert verbleibt.

Die Hauptkomponenten eines PMD-Kompensators sind somit

- eine Meßeinrichtung, welche die PMD des optischen Übertragungssystems kontinuierlich mißt,

- ein steuerbarer Emulator, welcher eine Übertragungsstrecke mit einstellbarer PMD möglichst genau nachbilden kann sowie
- eine Regelvorrichtung, welche mit der Meßvorrichtung und dem Emulator verbunden ist, um adaptiv abhängig von dem Meßausgangssignal der Meßvorrichtung den Emulator derart zu steuern, daß die PMD der Übertragungsstrecke durch den Emulator kompensiert wird.

Hierzu muß der Emulator dazu ausgelegt sein, die DGD der Übertragungsstrecke möglichst genau nachzubilden. Ferner muß der Emulator eine "Kompensationsstrecke" emulieren, welche ein "inverses" PMD-Verhalten aufweist. Dazu muß der schnelle Ausgangs-PSP der Übertragungsstrecke mit dem langsamen Eingangs-PSP des Emulators (der Kompensationsstrecke) zusammenfallen und umgekehrt.

Folglich kommt es bei einem PMD-Kompensator erster Ordnung darauf an

- eine einstellbare DGD zu generieren und
- die PSP dieser einstellbaren DGD in alle möglichen Richtungen zu drehen. Ein PMD-Kompensator zweiter Ordnung sollte ferner eine wellenlängenabhängige DGD mit wellenlängenabhängigen PSP emulieren können, wobei die PSP wieder frei drehbar sein müssen.

Eine Hauptkomponente eines PMD-Kompensators ist somit der PMD-Emulator, welcher auch in Alleinstellung als vielfach einstellbares, kostengünstiges und dämpfungsarmes Bauelement zur Emulation des frequenzabhängigen Polarisationsübertragungsverhaltens von LWL-Strecken von bis zu mehreren 1000 km Länge zu unterschiedlichen Zeitpunkten und bei unterschiedlichen Temperaturen in statistisch signifikante Weise Verwendung finden kann. Bekannte PMD-Kompensatoren sind entweder unvollständig, weil die Art und Weise der gezielten Regelung nicht geklärt ist, haben einen hohen Aufwand an optischen und elektrischen Komponenten oder funktionieren nicht zufriedenstellend. Marktreife Produkte sind bis jetzt weltweit nicht bekannt.

Ein Grund hierfür liegt zum einen darin, daß in der Vergangenheit keine Meßeinrichtung für PMD-bedingte Verzerrungen zur Verfügung gestanden hat, die ausreichend schnell und hinreichend einfach aufgebaut ist. Weiter ist auch kein Emulator bekannt, welcher - bei vertretbarem Einstellungsaufwand - die PMD einer realen Übertragungsstrecke exakt nachbilden kann.

Die DE 198 16 178 A1 offenbart einen PMD-Emulator oder-Kompensator innerhalb eines Lichtwellenleiters, der aus einem polarisationserhaltenen Lichtwellenleiter PMF besteht, welcher nicht unterbrochen wird und auch bei der Herstellung nicht zerschnitten oder, außer am Eingang oder Ausgang, gespleißt werden muss. Der PMD-Emulator oder -Kompensator enthält eine Kette von Einfachemulatoren oder -kompensatoren. Die Wirkung einer Polarisationsänderung wird durch Torsion der Faser erreicht. Dadurch wird die intrinsische lineare Doppelbrechung gestört und durch einen Anteil an zirkularer Doppelbrechung überlagert. So wird ein Energieaustausch zwischen den beiden geführten linearen Polarisationsmoden, d. h., eine Modenkonversion, bewirkt. Infolge dessen liegt eine veränderte Polarisation vor.

Typische Anforderungen an einen PMD-Kompensator bzw. einen PMD-Emulator für optische Übertragungsstrecken sind:

- ein großer kompensierbarer Bereich von z.B. 0 bis 100 ps,
- Ausregelbarkeit bis auf eine möglichst geringe Rest-PMD,
- schnelles Ausregeln bei Fluktuationen auf der Übertragungsstrecke,
- ein sicheres Regelverhalten für jede Art der PMD
- kein Verharren der Regelung in lokalen Minima,
- eine geringe Einfügedämpfung und
- eine geringe Varianz der Einfügedämpfung.

Der Erfindung liegt angesichts der oben genannten Probleme die Aufgabe zugrunde, eine Emulationsvorrichtung zur Emulation einer Polarisationsmodendispersion PMD eines optischen Übertragungssystems bereitzustellen, welche das Polarisationsübertragungsverhalten einer optischen Übertragungsstrecke bei einer einfachen Einstellbarkeit möglichst genau nachbilden kann. Ferner ist es eine Aufgabe der Erfindung, eine Kompensationsvorrichtung anzugeben, welche eine derartige Emulationsvorrichtung verwendet Femer ist es Aufgabe der Erfindung, eine Meßvorrichtung zur Messung einer Polarisationsmodendispersions (PMD)-bedingten Verzerrung eines optischen Signals vorzuschlagen, welche eine schnelle und genaue Detektion der PMD einer optischen Übertragungsstrecke gestattet. Aufgabe ist ferner, eine Kompensationsvorrichtung anzugeben, welche eine derartige Meßvorrichtung aufweist. Schließlich ist es Aufgabe der Erfindung, eine Kompensationsvorrichtung zur Kompensation Polarisationsmodendispersions (PMD)-bedingter Verzerrungen in einem optischen Übertragungssystem anzugeben, welche eine Regelvorrichtung aufweist, die eine schnelle und sichere Ausregelung von PMD-bedingten Signalverzerrungen ermöglicht.

Die die Emulationsvorrichtung betreffende Aufgabe wird durch eine Emulationsvorrichtung gemäß Anspruch 1 gelöst. Eine erfindungsgemäße Kompensationsvorrichtung, welche eine derartige Emulationsvorrichtung verwendet, ist in Anspruch 15 angegeben. Eine Kompensationsvorrichtung, weiche eine neuartige Meßvorrichtung aufweist, ist in Anspruch 16 beschrieben. Schließlich wird die die Kompensationsvorrichtung mit der neuartigen Regelvorrichtung betreffende Aufgabe durch eine Kompensationsvorrichtung gemäß Anspruch 21 gelöst. Bevorzugte Ausführungsformen sind Gegenstand der abhängigen Ansprüche.

Gemäß einem ersten Aspekt der Erfindung umfaßt eine Emulationsvorrichtung zur Emulation einer Polarisationsmodendispersion PMD eines optischen Übertragungssystems

- einen Emulatoreingang für ein optisches Eingangssignal;
- zumindest ein steuerbares doppelbrechendes Polarisationstransformationselement mit einem Transformationselementein- und einem Transformationselementausgang, welches zur Polarisationstransformation des optischen Signals ausgelegt ist;
- zumindest ein doppelbrechendes DGD-Element mit einem DGD-Eingang und einem DGD-Ausgang, wobei das DGD-Element eine differentielle Gruppenlaufzeit (bzw. Gruppenlaufzeitverzögerung) DGD zwischen zwei zueinander orthogonal polarisierten Propagationsmoden bzw. Polarisationsmoden des DGD-Elements aufweist; und
- einen Emulatorausgang für ein PMD-verändertes optisches Ausgangssignal;

wobei das Polarisationstransformationselement und das DGD-Element im optischen Signalweg zwischen dem Emulatorein- und dem Emulatorausgang derart zueinander angeordnet sind, daß die Doppelbrechungsachsen am Transformationselementausgang um einen von 0° verschiedenen Verdrehwinkel gegenüber den Doppelbrechungsachsen am DGD-Eingang verdreht sind.

Die erfindungsgemäße Emulationsvorrichtung weist vorzugsweise eine sequentielle Anordnung des Emulatoreingangs, des Polarisationstransformationselements, des DGD-Elements und des Emulatorausgangs in dieser Reihenfolge auf. Das Polarisationselement ist dazu ausgelegt, den Polarisationszustand eines eingehenden optischen Signals in steuerbarer Weise zu transformieren.

Das Polarisationstransformationselement muß jedoch nicht als "vollwertiger" Polarisationssteller ausgebildet sein, welcher jeden beliebigen Polarisationszustand auf jeden anderen beliebigen Polarisationszustand abbilden kann. Denn dadurch, daß eine feste Beziehung zwischen den Doppelbrechungsachsen zwischen dem Polarisationstransformationselement an dessen Transformationselementausgang und den Doppelbrechungsachsen des DGD-Elements an dessen DGD-Eingang besteht, sind die Anforderungen an die Transformationseigenschaften bzw. die notwendigen Transformationsfreiheitsgrade des verwendeten Polarisationstransformationselement geringer als bei herkömmlichen Emulationsvorrichtungen, bei denen keine derartige Verdrehwinkelbeziehung besteht.

So werden bei herkömmlichen Emulationsvorrichtungen typischerweise "universelle" Polarisationssteller eingesetzt, welche drei voneinander unabhängige Transformationsfreiheitsgrade aufweisen. Diese drei Freiheitsgrade sind notwendig um einen beliebigen Polarisationszustand in einen beliebigen anderen Polarisationszustand zu transformieren. Veranschaulichen läßt sich eine derartige Polarisationstransformation durch die sogenannte Poincaré-Kugel, deren Oberflächenpunkte jeweils einen Polarisationszustand definieren. Um von einem Oberflächenpunkt der von den Stokes-Vektoren $S_1$, $S_2$, $S_3$ aufgespannten Poincare-Kugel zu einem anderen Oberflächenpunkt zu gelangen, sind ungünstigstenfalls drei Transformationsschritte notwendig. Verläuft nämlich beispielsweise die Transformationsachse, um welche der erste Transformationsschritt ausgeführt wird, zufällig durch den zu transformierenden Polarisationszustand (Punkt auf der Oberfläche der Poincaré-Kugel), so kann durch diesen ersten Polarisationstransformationsschritt keine Poiarisationstransformation erzielt werden, da kein neuer Oberflächenpunkt auf der Poincare-Kugel erreicht wird. In diesem entarteten Fall werden somit beide weiteren, zueinander unabhängigen Polarisationstransformationsschritte benötigt, um jeden Oberflächenpunkt der Poincaré-Kugel zu erfassen.

Erfindungsgemäß besteht jedoch eine vorbestimmte bzw. vorbestimmbare Beziehung zwischen den Doppelbrechungsachsen des Polarisationstransformationselements und des DGD-Elements, welche vorteilhafterweise zu einer Reduktion der Anzahl der notwendigen unabhängigen Polarisationsfreiheitsgrade des Polarisationstransformationselements führt.

Um beispielsweise eine Emulationsvorrichtung bereitzustellen, welche eine vorbestimmte DGD und eine einstellbare Eingangs-PSP aufweist, ist es bereits ausreichend, ein Polarisationstransformationselement signaleingangsseitig vor dem DGD-Element anzuordnen und für eine vorbestimmte bzw. vorbestimmbare Verdrehwinkelbeziehung zwischen den Doppelbrechungsachsen des DGD-Elements und des Polarisationstransformationselements zu sorgen. Im genannten Beispiel ist es beispielsweise bereits ausreichend, zwei unabhängige Polarisationstransformationsfreiheitsgrade (zwei Einflußgrößen, z.B. zwei Faserquetscher) des Polarisationstransformationselements vorzusehen. Ein "universeller" Polarisationssteller, welcher drei Polarisationstransformationsfreiheitsgrade aufweisen müßte, ist entbehrlich.

Die erfindungsgemäße Emulationsvorrichtung kommt somit - bei gleicher DGD- bzw. PSP-Einstellbarkeit - mit einer geringeren Anzahl von "Einflußelementen" bzw. Polarisationstransformationsfreiheitsgraden aus. In anderen Worten müssen weniger Einflußelemente vorgesehen sein als bei vergleichbaren herkömmlichen Emulationsvorrichtungen. Da der Einstellaufwand einer Emulationsvorrichtung dramatisch mit der Anzahl der einzustellenden Einflußelemente, d.h. der steuerbaren Polarisationstransformationselemente, ansteigt, ist die erfindungsgemäße Emulationsvorrichtung wesentlich einfacher und damit schneller einstellbar. Sie eignet sich somit hervorragend für Emulations- und Kompensationsaufgaben, bei denen es auf eine schnelle (ms-Bereich) und genaue PMD-Emulation ankommt.

Vorzugsweise umfaßt das Polarisationstransformationselement zumindest ein doppelbrechendes variables DGD-Element mit einer zur Transformation der Polarisation einstellbaren differentiellen Gruppenlaufzeit (bzw. Gruppenlaufzeitverzögerung) $DGD_{var}$. Die Polarisationstransformation wird somit über eine einstellbare DGD, d.h. eine Gruppenlaufzeitdifferenz zwischen den orthogonal polarisierten Propagationsmoden einer optischen Übertragungsstrecke (beispielsweise einer SMF) erzielt. Durch die variable DGD lassen sich gezielt Phasendifferenzen zwischen den orthogonalen Propagationsmoden erzeugen, welche sich in einer Transformation des Polarisationszustandes des optischen Signals auswirken.

Vorzugsweise ist der Quotient $DGD_{var}/DGD$ kleiner als 0.5 und vorzugsweise kleiner als 0.1. Die Aufgabe des Polarisationstransformationselements, welches zur Polarisationstransformation ein variables DGD-Element umfaßt, ist lediglich eine geeignete Transformation des Polarisationszustandes, nicht jedoch die Bereitstellung einer zu emulierenden DGD. In anderen Worten muß das Polarisationstransformationselement lediglich dafür sorgen, die Eingangs-PSP geeignet zu transformieren.

Besonders bevorzugt ist eine Emulationsvorrichtung, bei welcher das Polarisationstransformationselement eine Vielzahl im Signalweg hintereinander angeordneter, doppelbrechender variabler DGD-Elemente umfaßt. Beispielsweise kann das Polarisationstransformationselement zwei variable DGD-Elemente umfassen, welche im Signalweg vor oder nach einem DGD-Element mit vorbestimmter bzw. vorbestimmbarer DGD angeordnet sind.

Vorzugsweise sind benachbarte variable DGD-Elemente der Vielzahl variabler DGD-Elemente derart angeordnet, daß ihre jeweiligen Doppelbrechungsachsen relativ zueinander um einen von 0° verschiedenen Verdrehwinkel verdreht sind. Somit besteht zwischen den einzelnen DGD-Elementen, bei welchen es sich um variable und feste DGD-Elemente handelt, eine vorbestimmte bzw. vorbestimmbare Beziehung der jeweiligen benachbarten bzw. angrenzenden relativen Orientierungen der Doppeibrechungsachsen.

Vorzugsweise beträgt der Verdrehwinkel 30° bis 60° und vorzugsweise ungefähr 45°. Besonders bevorzugt ist eine Anordnung, bei welchen die Orientierungswinkel der variablen und festen DGD-Elemente eine alternierende Verdrehwinkelreihe bewegen. Wenn beispielsweise der Orientierungswinkel eines ersten (variablen oder festen) DGD-Elements 0° beträgt, so könnte das im Signalweg nachfolgende DGD-Element einen Orientierungswinkel der Doppelbrechungsachsen von 45° aufweisen. Das wiederum nachfolgende (variable oder feste) DGD-Element könnte wieder einen absoluten Orientierungswinkel von 0° aufweisen. Insgesamt ergäbe sich somit eine Orientierungswinkelreihe, welche 0°, 15°, 0°, ... lautet. Gleichermaßen ist es jedoch auch möglich, die absoluten Orientierungswinkel der Doppelbrechungsachsen der einzelnen (festen oder variablen) DGD-Elemente als aufsteigende Reihe anzuordnen.

Vorzugsweise umfaßt das DGD-Element zumindest einen polarisationserhaltenden Lichtwellenleiter und/oder zumindest einen doppelbrechenden Kristall und das Polarisationstransformationselement zumindest einen polarisationserhaltenden Lichtwellenleiter, zumindest einen doppelbrechenden Kristall und/oder einen vergleichsweise kurzen Monomode-Lichtwellenleiter (SMF). Besonders bevorzugt ist hierbei eine Ausführungsvariante, bei welcher sowohl die (festen) DGD-Elemente als auch die variablen DGD-Elemente als polarisationserhaltende Fasern (polarization maintaining fiber, nachfolgend kurz als PMF bezeichnet) ausgebildet sind.

Wenn für die Polarisationstransformationselemente eine SMF mit einem mechanischen Einflußelement (z.B. einem Faserquetscher bzw. -stretcher) zum Einsatz kommen soll, so muß die SMF derart kurz sein, daß keine unerwünschte zufällige bzw. unkontrollierte Polarisationstransformation durch sie bewirkt wird. Vorzugsweise wird daher eine SMF verwendet, deren Länge gerade ausreichend bemessen ist, einen Faserquetscher bzw. -stretcher ihr anzuordnen. Vorzugsweise schließen sich unmittelbar an den Faserquetscher die (festen) DGD-Elemente an. Es ist somit besonders vorteilhaft, die Länge der SMF nur unwesentlich länger als die vom Faserquetscher gequetschte Faserlänge zu wählen. Beispielsweise ist diese nicht vom Faserquetscher bzw -stretcher erfaßte Länge kleiner als 10cm, bevorzugt kleiner 5cm und besonders bevorzugt kleiner 3cm. Die unkontrollierte Polarisationstransformation durch die nicht vom Faserquetscher erfaßten SMF-Stücke ist dann vernachlässigbar klein. Die Doppelbrechung der SMF ist in einem solchen Fall spannungsinduziert, so daß die Doppelbrechungsachse der SMF mit der Orientierungs- bzw. Quetschachse des mechanischen Einflußelements zusammenfällt, insbesondere mit der Quetschrichtung eines Faserquetschers.

Die herkömmlicherweise verwendeten Polarisationstransformationselemente, welche eine SMF in Verbindung mit Faserquetschern aufweisen, verwenden jedoch stets vergleichsweise lange Monomode-Lichtwellenleiter. Insbesondere sind bei derartigen bekannten Polarisationstransformationselementen die vom Faserquetscher nicht erfaßten Faserteilstücke derartig lang, daß es durch sie zu unkontrollierten bzw. unerwünschten Polarisationsänderungen kommt. Eine feste Verdrehwinkelbeziehung zwischen der Doppelbrechungsachse der SMF (welche in diesem Fall die Quetschachse des Faserquetschers bzw. -stretchers ist) und den jeweiligen Doppelbrechungsachsen benachbarter (fester) DGD-Elemente besteht somit im Stand der Technik nicht.

Vorzugsweise umfaßt das Polarisationstransformationselement zumindest ein mechanisches Stellelement, welches eine mechanische Wirkung zur Änderung von $DGD_{var}$ ausübt und vorzugsweise einen Faserquetscher und/ oder -stretcher umfaßt. Insbesondere umfaßt das Polarisationstransformationselement hierzu eine PMF, auf welche der Faserquetscher und/oder -stretcher wirkt. Durch den mechanischen Einfluß des mechanischen Stellelements auf die PMF, bei welchem es sich um einen doppelbrechenden Lichtwellenleiter handelt, kann die $DGD_{var}$ dieses PMF-Stücks gezielt eingestellt werden.

Vorzugsweise weist der Faserquetscher oder -stretcher ein piezoelektrisches Element auf, welches zur Dämpfung von Querschwingungen in einem Lagergehäuse seitlich durch elastische Schwingungsdämpfer geführt ist. Das piezoelektrische Element, an welches ein elektrisches Signal zur Erzeugung einer vorbestimmten mechanischen Wirkung anlegbar ist, muß bei modernen Emulationsvorrichtungen eine genaue und reproduzierbare Wirkungsweise auf die PMF haben. Ziel ist es insbesondere, den Einfluß von unvermeidlichen Schwingungen bzw. Vibrationen des Faserquetschers oder -stretchers in ihrem Einfluß auf das Polarisationstransformationsverhalten zurückzudrängen. Es hat sich gezeigt, daß eine seitliche elastische Führung der piezoelektrischen Elemente, welche die Querschwingungen des piezoelektrischen Elements unterdrückt, zu einer spürbaren Steigerung der Reproduzierbarkeit und Genauigkeit des mechanischen Stellelements führt.

Bevorzugt weist der Faserquetscher oder -stretcher ein piezoelektrisches Element auf, welches derart über ein thermisch kompensierendes Ausgleichselement an einem Lagergehäuse festgelegt ist, daß der resultierende thermische Ausdehnungskoeffizient der Anordnung des piezoelektrischen Elements und des Ausgleichselements gleich zu dem thermischen Ausdehungskoeffizienten des Lagergehäuses ist. Demgemäß muß das Ausgleichselement derart gestaltet sein, daß der thermische Ausdehnungskoeffizient der Gesamtanordnung aus piezoelektrischem Element und Ausgleichselement genau demjenigen des Lagergehäuses entspricht. Unvermeidliche Temperaturvariationen, denen ein derartiger Faserquetscher ausgesetzt ist, werden in diesem Fall nicht zu einer Schwankung der mechanischen Spannung auf die Faser führen.

Polarisationstransformationselemente, welche sich mechanischer Stellelemente bedienen, sind konstruktionsbedingt temperaturabhängigen Schwankungen ausgesetzt. Erwärmt sich beispielsweise das mechanische Stellelement, so kann die Wärmeausdehnung der einzelnen Komponenten dazu führen, daß sich die mechanische Wirkung (d.h. die Druck- oder Zugspannung) auf die Faser ändert. Der Einfluß derartiger Temperaturschwankungen kann dadurch minimiert werden, daß ein kompensierendes Ausgleichselement an dem piezoelektrischen Element vorgesehen ist, dessen geometrische Abmessung und Wärmeausdehnungskoeffizient derart auf das verwendete piezoelektrische Element abgestimmt sind, daß der Wärmeausdehnungskoeffizient der Gesamtanordnung des piezoelektrischen Elements und des kompensierenden Elements gleich zu dem thermischen Wärmeausdehnungskoeffizienten des umgebenden Lagergehäuses ist. Eine Temperaturschwankung führt dann lediglich dazu, daß sich sämtliche Bauteile des mechanischen Stellelements gleichmäßig thermisch ausdehnen, ohne daß es zu einer Veränderung der auf die Faser aufgebrachten Zug- bzw. Druckspannung kommt.

Vorzugsweise weist der Faserquetscher einen Quetschstempel auf, wobei zwischen der zu quetschenden Faser und dem Quetschstempel eine Folie, vorzugsweise eine Metallfolie, derart angeordnet ist, daß ein Verdrehen der Faser bei einem Verrutschen des Quetschstempels verhindert wird.

Um die Genauigkeit und Reproduzierbarkeit mechanischer Stellelemente, welche in Polarisationstransformationselementen eingesetzt werden, weiter zu verbessern, wird somit vorgeschlagen, zwischen den Quetschstempel und der Faser eine dünne Folie anzuordnen. Vorzugsweise verläuft die Folie nicht nur zwischen Quetschstempeln und Fasern, sondern umschließt dieselbe auch auf der dem Quetschstempel abgewandten Seite. Ein Verrutschen des Quetschstempels auf der Faser, welche herkömmlicherweise zu einer störenden Veränderung der Polarisationstransformation führen kann, ist bei der Verwendung der Metallfolie unkritischer, da nunmehr mit einem Verrutschen des Querstempels auf der Faser keine Verdrehung derselben verbunden ist.

Besonders bevorzugt ist eine Emulationsvorrichtung, bei welcher der polarisationserhaltende Lichtwellenleiter des Polarisationstransformationselements am Transformationselementausgang derart mit dem polarisationserhaltenden Lichtwellenleiter des DGD-Elements am DGD-Eingang verspleißt ist, daß der Verdrehwinkel zwischen den Doppelbrechungsachsen am Transformationselementausgang relativ zu denjenigen am DGD-Eingang ungleich 0° ist. Die Verdrehwinkel der Doppelbrechungsachsen von angrenzenden (variablen oder festen) DGD-Elementen werden somit durch ein entsprechendes Verspleißen der einzelnen PMF-Stücke miteinander definiert. Vorzugsweise besteht die Emulationsvorrichtung hierbei aus einer sequentiellen, verspleißten Anordnung von PMF-Faserstücken, bei welchen sich die Spleißwinkel insbesondere in abwechselnder Reihenfolge ändern.

Gemäß einer bevorzugten Ausführungsform ist zwischen dem Emulatoreingang und dem Polarisationstransformationselement ein zweites doppelbrechendes DGD-Element angeordnet. Eine derartig aufgebaute Emulationsvorrichtung ermöglicht in einfachster Weise die Emulation einer optischen Übertragungsstrecke mit variabler DGD. Das zwischen den beiden DGD-Elementen mit vorbestimmter bzw. vorbestimmbarer DGD angeordnete Polarisationstransformationselement ist hierbei in der Lage, die Eingangs-PSP des im Signalweg nachfolgenden ersten DGD-Elements mit den Ausgangs-PSP des im Signalweg vorgeschalteten zweiten DGD-Elements derart zu verknüpfen, daß sich - abhängig von der Einstellung des Polarisationstransformationselements - einmal die Summe der DGDs des ersten und des zweiten DGD-Elements und anderenfalls die Differenz der beiden DGD-Elemente ergibt. Durch den kontinuierlichen Übergang von dem Summations- zu dem Subtraktionspunkt können alle Zwischenwerte eingestellt werden.

Besonders bevorzugt ist es, den Winkel zwischen den Doppelbrechungsachsen des zweiten DGD-Elements und dem Polarisationstransformationselement zwischen 30 bis 60, besonders bevorzugt 45°, zu wählen. Besonders bevorzugt ist somit eine Verdrehwinkelreihe, bei welcher das zweite (signaleingangseitige) DGD-Element einen absoluten Orientierungswinkel der Doppelbrechungsachsen von 0°, das Polarisationstransformationselement von 45°, und das erste DGD-Element von 0° aufweist. Alternativ kann das erste DGD-Element auch einen absoluten Orientierungswinkel der Doppelbrechungsachsen von 90° aufweisen. Bemerkenswert ist, daß in den obigen Fällen lediglich ein einziger Polarisationstransformationsfreiheitsgrad des Polarisationstransformationselements vorgesehen sein muß, um eine Emulationsvorrichtung mit variabler DGD zu erzeugen.

Die oben genannte Emulationsvorrichtung kann vorzugsweise dadurch weiterentwickelt werden, daß zwischen dem Emulatoreingang und dem zweiten DGD-Element ein zweites Polarisationstransformationselement angeordnet ist. Während das Polarisationstransformationselement, welches zwischen dem ersten und dem zweiten DGD-Element angeordnet ist, in erste Linie eine variable Gesamt-DGD der Emulationsvorrichtung erzeugt, kann das zweite Polarisationstransformationselement dazu eingesetzt werden, die Eingangs-PSP der Emulationsvorrichtung geeignet zu transformieren.

Vorzugsweise sind zwischen dem Emulatoreingang und dem Emulatorausgang eine Vielzahl von Polarisationstransformationselementen und DGD-Elementen in abwechselnder Reihenfolge angeordnet, wobei zumindest eines der Polarisationstransformationselemente aus einem variablen DGD-Element oder höchstens zwei relativ zueinander verdreht orientierten variablen DGD-Elementen besteht. Eine derartige, in Signalrichtung "sequentielle" Anordnung von Polarisationstransformationselementen und DGD-Elementen mit fester DGD gestattet insbesondere eine genauere Emulation der zu emulierenden optischen Übertragungsstrecke. Insbesondere erlaubt ein derartig kaskadierter Aufbau auch die Emulation einer Übertragungsstrecke mit einer PMD zweiter (und gegebenenfalls höherer) Ordnung. Durch die zusätzlichen Freiheitsgrade, welche durch die größere Anzahl der Polarisationstransformationselemente bereitgestellt wird, läßt sich eine genauere Anpassung der PMD der zu emulierenden optischen Übertragungsstrecke erzielen.

Vorzugsweise besteht das emulatoreingangsseitige Polarisationstransformationselement aus höchstens vier relativ zueinander verdrehten variablen DGD-Elementen und die übrigen Elemente bestehen aus einem variablen DGD Element oder höchstens zwei relativ zueinander verdrehten variablen DGD Elementen. Eine derartige Emulationsvorrichtung gestattet eine genaue und schnelle Einstellung einer PMD (höherer Ordnung), wobei aufgrund der vorbestimmten bzw. vorbestimmbaren Orientierungen der Doppelbrechungsachsen der einzelnen Elemente zueinander eine geringere Anzahl von Polarisationstransformationsfreiheitsgrade, d.h. eine geringere Anzahl von "Einflußelementen", als herkömmlicherweise vorgesehen ist. Die geringere Anzahl von Freiheitsgraden ermöglicht eine schnellere und einfachere Einstellung der Emulationsvorrichtung, womit diese sich insbesondere für zeitkritische PMD-Kompensationsaufgaben eignet.

Gemäß diesem Aspekt der Erfindung umfaßt eine Kompensationsvorrichtung zur Kompensation Polarisationsmodendispersions (PMD)-bedingter Verzerrungen in einem optischen Übertragungssystem

- eine Emulationsvorrichtung gemäß diesem Aspekt der Erfindung, wobei der Emulatoreingang zur Eingabe eines PMD-verzerrten optischen Signals und der Emulatorausgang zur Ausgabe eines optischen Ausgangssignals ausgelegt ist;
- eine Meßvorrichtung zur Messung der PMD-bedingten Verzerrung des optischen Signals und Ausgabe eines entsprechenden Meßausgabesignals; und
- eine Regelvorrichtung, an der das Meßausgangssignal anliegt und welche die Emulationsvorrichtung derart steuert, daß diese die PMD-bedingte Verzerrung minimiert und bevorzugt vollständig kompensiert.

Die Kompensationsvorrichtung weist somit den bekannten Grundaufbau einer PMD-Meßvorrichtung auf, welche eine PMD mißt, die sich aus der optischen Übertragungsstrecke und der Emulationsvorrichtung ergibt, die Meßwerte einer Regelvorrichtung übergibt, die sodann die Emulationsvorrichtung derart einstellt, daß die Gesamt-PMD auf ein Minimum zurückgeht. Dies ist dann der Fall, wenn die Emulationsvorrichtung ein "inverses" PMD-Verhalten, d.h. eine möglichst gleiche DGD bei invers orientierter PSP zur Kompensation der PMD-bedingten Verzerrungen erzeugt.

Gemäß einem zweiten Aspekt der Erfindung umfaßt eine Meßvorrichtung zur Messung einer Polarisationsmodendispersions (PMD) -bedingten Verzerrung eines optischen Signals

- einen Meßeingang für das optische Signal;
- zumindest einen Polarisator;
- zumindest ein Polarisationstransformationselement, welches zur Polarisationstransformation des optischen Signals ausgelegt und in dem Signalweg des optischen Signals zwischen dem Meßeingang und dem Polarisator angeordnet ist;

- zumindest einen im Signalweg des optischen Signals hinter dem Polarisator angeordneten Fotodetektor zur Detektion der Intensität $P_{pol}$ des optischen Signals; und

- eine mit dem Polarisationstransformationselement und dem Fotodetektor verbundenen Steuer- und Ausgabeeinrichtung, welche das Polarisationstransformationselement derart steuert, daß die Intensität $P_{pol}$ entweder minimal oder maximal ist und ein der minimalen bzw. maximalen Intensität $P_{pol, min}$ bzw. $P_{pol, max}$ des optischen Signals entsprechendes Meßausgangssignal als Maß für die PMD Verzerrung des optischen Signals ausgibt.

Gemäß dem zweiten Aspekt der Erfindung erfolgt die Messung der PMD einer Übertragungsstrecke somit auf rein optischem Wege und unterscheidet sich somit grundlegend von herkömmlichen elektrischen PMD-Detektionsverfahren. Anknüpfungspunkt- für die PMD-Detektion gemäß dem zweiten Aspekt der Erfindung ist eine indirekte und vereinfachte Messung des Polarisationsgrades des PMD-verzerrten optischen Signals.

Das Meßprinzip beruht auf folgender Überlegung. Wenn

(a) DGD = 0 oder
(b) der Eingangspolarisationszustand ("state of polarization" am Eingang; $SOP_{in}$) relativ zu den Eingangs-PSP der optischen Übertragungsstrecke derart liegt, daß er mit einer Eingangs-PSP zusammenfällt,

dann tritt keine PMD-bedingte Signalverzerrung auf. In anderen Worten generiert eine optische Übertragungsstrecke keine PMD-bedingte Verzerrungen, wenn entweder DGD=0 oder ein optisches Signal derart in die Übertragungsstrecke eingekoppelt wird, daß die Eingangspolarisation ($SOP_{in}$) genau mit einer Eingangs-PSP der Übertragungsstrecke zusammenfällt.

Ist eine der obigen Bedingungen erfüllt, so gilt:

(c) Der Polarisationszustand des optischen Signals am Ausgang der Übertragungsstrecke ist wellenlängenunabhängig, d.h. $SOP_{out}(\lambda)$ = konstant und ferner
(d) der Polarisationsgrad (degree of polarization; DOP) ist gleich 100%.

Die Eigenschaften (c) und (d) bedingen einander. Umgekehrt gilt, daß eine PMD-Verzerrung auftritt, wenn eine DGD vorhanden ist und $SOP_{in}$ nicht mit einer Eingangs-PSP zusammenfällt. In diesem Fall ist $SOP_{out}(\lambda)$ nicht konstant über der Wellenlänge und DOP ist kleiner als 100%.

Eine rigorose Messung von $SOP_{out}(\lambda)$ ist zwar möglich, erfordert jedoch einen erheblichen und somit teuren apparativen Aufbau. Auch eine rigorose Messung des Polarisationsgrades als Maß für die PMD mittels eines Polarimeters ist möglich. Die Verwendung eines Polarimeters führt jedoch auch hier zu einer apparativ aufwendigen und damit teuren Meßvorrichtung, welche zudem für PMD-Kompensationaufgaben nicht schnell genug ist.

Der zweite Aspekt der Erfindung schlägt eine modifizierte bzw. indirekte Messung des Polarisationsgrades des PMD-verzerrten Ausgangssignals vor. Hierzu weist die Meßvorrichtung einen Polarisator mit vorbestimmter bzw. vorbestimmbarer Polarisationsachse auf, welchem ein Fotodetektor zur Messung der optischen Leistung über den gesamten relevanten Wellenlängenbereich nachgeschaltet ist. Zwischen dem Meßeingang für ein PMD-verzerrtes optisches Signal und dem Polarisator ist ein Polarisationstransformationselement vorgesehen, welches von einer Steuer- und Ausgabeeinrichtung derart gesteuert wird, daß es die vom Fotodetektor detektierte optische Gesamtleistung auf ein Extremum regelt.

Bevorzugt steuert die Steuer- und Ausgabeeinrichtung das Polarisationstransformationselement derart, daß die optische Gesamtleistung $P_{pol}$ minimiert wird, d.h. den Minimalwert $P_{pol,min}$ annimmt. Das Polarisationstransformationselement paßt somit die Eingangspolarisation des PMD-verzerrten optischen Eingangssignals an den Polarisator an. Eine detektierte optische Leistung $P_{pol} = 0$ bedeutet, daß alle Spektralanteile des optischen Datensignals mit der gleichen Polarisation (nämlich der orthogonalen) auf den Polarisator auftreffen. Das auf den Polarisator auftreffende optische Signal ist in diesem Fall vollständig polarisiert, d.h. DOP = 100%. Dies wiederum bedeutet, daß keine PMD-bedingte Signalverzerrung vorhanden ist.

Die von der Steuer- und Ausgabeeinrichtung vorgenommene Regelung des Polarisationstransformationselements auf ein Extremum der vom Fotodetektor detektierten optischen Leistung kann sehr schnell erfolgen, wenn für die Regelschleife eine später in Zusammenhang mit einer Regelvorrichtung für eine Kompensationsvorrichtung zu beschreibende Dither- bzw. Modulationstechnik Verwendung findet. Hierbei werden die Einflußelemente des Polarisationstransformationselements mit einer niederfrequenten Modulationsfrequenz beaufschlagt, deren Modulationsanteile in dem Ausgangssignal des Fotodetektors phasenrichtig detektiert und verstärkt werden. Das Eindrehen der Polarisation des optischen Signals orthogonal zu der Polarisationsachse des Polarisators kann so gezielt und schnell erfolgen.

Vorzugsweise ist ein zweiter Fotodetektor zur Detektion der Gesamtintensität $P_{ges}$ des optischen Signals vor dem Polarisationstransformationselement vorgesehen und die Steuer- und Ausgabeeinrichtung gibt ein der normierten minimalen bzw. maximalen Intensität $P_{pol,min}$ / $P_{ges}$ bzw. $P_{pol,max}$ / $P_{ges}$ entsprechendes Meßausgangssignal aus. Diese Quotientenbildung der polarisierten optischen Leistung zu der Gesamtleistung macht das normierte Signal unabhängig von der absoluten Lichtleistung. Außerdem werden störende amplitudenmodulierte Signalanteile, die vom optischen Datensignal herstammen, "herausgekürzt" und können nicht zu einer störenden Beeinflussung des Meßsignals führen.

Vorzugsweise umfaßt das Polarisationstransformationselement zumindest ein variables DGD-Element mit einer zur Transformation der Polarisation einstellbaren differentiellen Gruppenlaufzeit (bzw. Gruppenlaufzeitverzögerung) $DGD_{var}$.

Vorzugsweise weist das Polarisationstransformationselement zwei variable DGD-Elemente auf, welche derart angeordnet sind, daß deren Doppelbrechungsachsen relativ zueinander um einen von 0° verschiedenen Verdrehwinkel verdreht sind.

Wie bereits ausführlich in Zusammenhang mit der oben beschriebenen Emulationsvorrichtung aufgezeigt worden ist, läßt sich durch eine vorbestimmte bzw. vorbestimmbare Festlegung des Verdrehwinkels zwischen den Doppelbrechungsachsen von zwei benachbarten bzw. angrenzenden DGD-Elementen eines Polarisationstransformationselements die Anzahl der notwendigen Transformationsfreiheitsgrade reduzieren. Bevorzugt beträgt der Verdrehwinkel etwa 45°. Die beiden variablen DGD-Elemente, welche entsprechend den variablen DGD-Elementen aufgebaut sein können, die im Zusammenhang mit der erfindungsgemäßen Emulationsvorrichtung beschrieben worden sind, können ein beliebiges PMD-verzerrtes optisches Signal hinsichtlich seines Polarisationszustandes derart eindrehen, daß die optische Gesamtleistung hinter dem Polarisator ein Extremum aufweist.

Vorzugsweise umfassen die variablen DGD-Elemente jeweils einen polarisationserhaltenden Lichtwellenleiter PMF und ein mechanisches Stellelement, weiches eine mechanische Wirkung zur Änderung von $DGD_{var}$ auf den Lichtwellenleiter ausübt und vorzugsweise einen Faserquetscher und/oder - stretcher aufweist. Der Faserquetscher und/ oder -stretcher kann einen Aufbau aufweisen, wie er in Zusammenhang mit der erfindungsgemäßen Emulationseinrichtung beschrieben worden ist

Gemäß dem zweiten Aspekt der Erfindung umfaßt daher eine Kompensationsvorrichtung zur Kompensation Polarisationsmodendispersions (PMD) -bedingter Verzerrungen in einem optischen Übertragungssystem

- eine Emulationsvorrichtung mit einem Emulatoreingang zur Eingabe eines PMD-verzerrten optischen Signals und einen Emulatorausgang zur Ausgabe eines optischen Ausgangssignals wie oben beschrieben;
- eine oben beschriebene Meßvorrichtung zur Messung der PMD-bedingten Verzerrung des optischen Signals und Ausgabe eines entsprechenden Meßausgangssignals; und .
- eine Regelvorrichtung, an der das Meßausgangssignal anliegt und welche die Emulationsvorrichtung derart steuert, daß diese die PMD-bedingte Verzerrung minimiert und bevorzugt vollständig kompensiert

Gemäß einem dritten Aspekt der Erfindung umfaßt eine Kompensaüonsvorrichtung zur Kompensation Polarisationsmodendispersions (PMD)-bedingter Verzerrungen in einem optischen Obertragungssystem

- eine Emulationsvorrichtung wie oben beschrieben mit einem Emulatoreingang zur Eingabe eines PMD-verzerrten optischen Signals und einen Emulatorausgang zur Ausgabe eines optischen Ausgangssignals, wobei die Emulationsvorrichtung eine Vielzahl von steuerbaren Polarisationstransformationenselementen und eine Vielzahl von DGD-Elementen aufweist;
- eine Meßvorrichtung zur Messung der PMD-bedingten Verzerrung des optischen Signals und Ausgabe eines entsprechenden Meßausgangssignals; und
- eine Regelvorrichtung, an der das Ausgangssignal anliegt und welche die Emulationsvorrichtung derart steuert, daß diese die PMD-bedingte Verzerrung minimiert und bevorzugt vollständig kompensiert,

wobei die Regelvorrichtung

- zur Ausgabe eines mit einem periodischen Modulationssignal überlagerten Stellsignals an die Polarisationstransformationselemente,
- zur intensitäts- und phasenrichtigen Detektion entsprechender Modulationsanteile in dem Meßausgangssignal und
- zur Erzeugung eines neuen Stellsignals abhängig von den detektierten Modulationsanteile ausgelegt ist.

Die neuartige Regelvorrichtung der erfindungsgemäßen Kompensationseinrichtung beruht auf einer Dither- bzw. Modulationstechnik. Die Regelvorrichtung gibt hierzu an jedes Polarisationstransformationselement der Emulationsvorrichtung ein Stellsignal zur Einstellung der gewünschten PMD der Emulationsvorrichtung aus. Zusätzlich überlagert die Regelvorrichtung das Stellsignal mit einem periodischen Modulationssignal geringer Amplitude (vorzugsweise kleiner als 5% der Gesamtstellsignalsamplitude). Das so modulierte Polarisationstransformationselement erzeugt einen entsprechenden Modulationsanteil in dem optischen Signal. Dieser Modulationsanteil spiegelt sich in dem Meßausgangssignal der Meßvorrichtung wieder und kann von der Regelvorrichtung frequenz- und phasenselektiv detektiert werden.

Hierdurch kann die Regelvorrichtung deterministisch erfassen, welchen Einfluß eine bestimmte Veränderung des Stellsignals, welches an das Polarisationstransformationselement ausgegeben wird, auf die Eigenschaft des optischen Signals hat. Insbesondere kann die Regelvorrichtung durch die frequenz- und phasenspezifische Detektion der Modulationsanteile in dem Meßausgangssignal einen Rückschluß darauf bilden, ob eine Vergrößerung oder eine Verkleinerung des Stellsignals zur Erzielung des Regelziels erforderlich ist.

Gleichermaßen kann die Regelvorrichtung aus der beschriebenen phasenrichtigen Detektion ebenfalls einen Rückschluß darauf treffen, um wieviel das Stellsignal vergrößert bzw. verkleinert werden muß, um möglichst schnell zu einer vollständigen Ausregelung der PMD-Verzerrung zu kommen.

Demgegenüber basieren Regelvorrichtungen für PMD-Kompensationsvorrichtungen, wie sie im Stand der Technik bekannt sind, ausnahmslos auf einer "trial-and-error"-Regelung. Hierbei wird wahllos ein "Einflußparameter" der einstellbaren Emulationsvorrichtung geändert, um zu prüfen, ob diese Änderung einen positiven Einfluß auf die PMD-Kompensation hat. Die Regelung erfolgt somit im Stand der Technik in nicht zielgerichteter deterministischer Weise, sondern wahllos nach dem Zufallsprinzip.

Die gezielte Ansteuerung der Emulationsvorrichtung durch die phasen- und frequenzrichtige Detektion der Modulationsanteile in dem das Ausgangssignal ermöglicht demgegenüber eine einfachere und wesentlich schnellere Kompensation PMD-bedingter Verzerrungen in optischen Übertragungssystemen.

Vorzugsweise sind die Modulationsfrequenzen der Modulationssignale für jedes Polarisationstransformationselement verschieden. Vorzugsweise liegen die Modulationsfrequenzen in einem Frequenzbereich von 20 kHz bis 500 kHz, besonders bevorzugt 40 kHz bis 150 kHz.

Die Erfindung wird nachfolgend mit Bezug auf begleitende Zeichnungen bevorzugter Ausführungsformen beispielhaft beschrieben. Es zeigt:

Fig. 1    eine erste Ausführungsform einer erfindungsgemäßen Emulationsvorrichtung, welche die Emulation einer Übertragungsstrecke mit einer vorbestimmten DGD und einer einstellbaren PSP ermöglicht;

Fig. 2    eine zweite Ausführungsform einer erfindungsgemäßen Emulationsvorrichtung, welche die Emulation einer Übertragungsstrecke mit einer variablen DGD ermöglicht;

Fig. 3    eine dritte Ausführungsform einer erfindungsgemäßen Emulationsvorrichtung mit kaskadierten DGD-Elementen mit jeweils variabler PSP;

Fig. 4    eine vierte Ausführungsform einer erfindungsgemäßen Emulationsvorrichtung mit variabler DGD und variabler PSP;

Fig. 5    eine fünfte Ausführungsform einer erfindungsgemäßen Emulationsvorrichtung mit variabler DGD mit mehreren DGD-Sektionen;

Fig. 6    eine sechste Ausführungsform einer erfindungsgemäßen Emulationsvorrichtung mit variabler DGD mit mehreren DGD-Sektionen und Endlos-Polarisationstransformationselementen;

Fig. 7    eine siebte Ausführungsform einer erfindungsgemäßen Emulationsvorrichtung mit kaskadierten DGD-Elementen mit jeweils variabler PSP und Endlos-Polarisationstransformationselementen;

Fig. 8    eine Ausführungsform einer erfindungsgemäßen Kompensationsvorrichtung mit einem DSP als Regelungvorrichtung;

Fig. 9    eine weitere Ausführungsform einer erfindungsgemäßen Kompensationsvorrichtung mit einer analogen Regelungvorrichtung;

Fig. 10   eine erste Ausführungsform eines erfindungsgemäßen Faserquetschers mit Rutschfolie;

Fig. 11   eine zweite Ausführungsform eines erfindungsgemäßen Faserquetschers mit Rutschfolie; und

Fig. 12   eine dritte Ausführungsform eines erfindungsgemäßen Faserquetscher mit passiver Temperaturkompensation; und

Fig. 13   schematisches Signal-Zeit-Diagramm zur Veranschaulichung einer PMD-bedingten Signalverzerrung

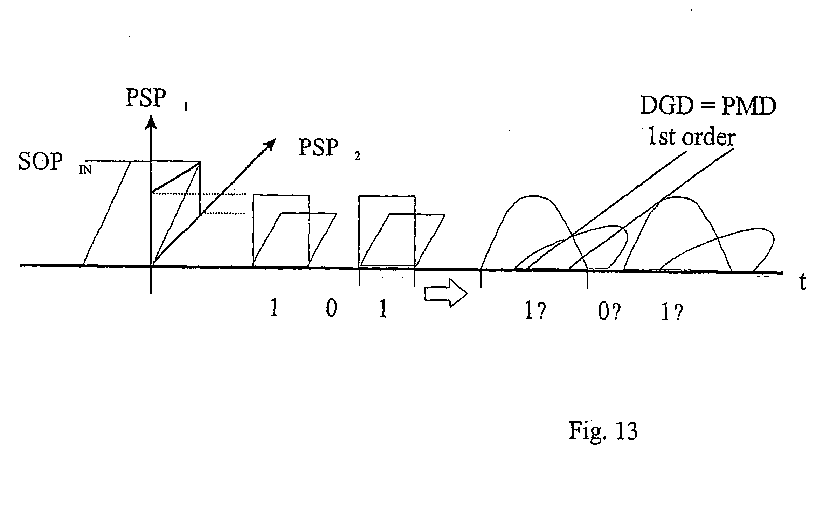

Zur Einführung in die der Erfindung zugrundeliegenden Probleme ist in Figur 13 schematisch der Einfluß der Polarisationsmodendispersion (PMD) einer optischen Übertragungsstrecke dargestellt. Bei der Übertragungsstrecke kann es sich beispielsweise um eine lange Lichtwellenleiter (LWL) -strecke aus einem Monomodelichtwellenleiter (SMF) mit zwischengeschalteten optischen Signalverstärken handeln, wie sie typischerweise zur hochratigen Signalübertragungssytem verwendet werden (z.B. OC-192 oder OC-768). Wie in der Beschreibungseinleitung bereits beschrieben wurde, weist eine SMF zwei zueinander orthogonale Polarisationsmoden auf. Herstellungs-, konstruktions- und/oder verlegungsbedingt ist der Faserkern der SMF hinsichtlich seines Brechnungsindex nicht vollständig isotrop. Statt dessen ist eine geringe Richtungsabhängigkeit des Brechungsindexes, beispielsweise durch eine mechanische Deformation der SMF, in der Praxis unvermeidbar.

Hierdurch entsteht ein modendispersives Verhalten des Übertragungssystem, welches als Polarisationsmodendispersion (PMD) bezeichnet wird. Die PMD umfaßt alle polarisationsabhängigen Laufzeiteffekte, bei denen sich die Signalausbreitung vollständig durch das Ausbreitungsverhalten zweier voneinander unabhängiger und zueinander orthogonaler Polarisationsmoden beschreiben läßt. Die Signalanteile unterschiedlicher Polarisation des optischen Signals laufen mit verschiedenen Gruppengeschwindigkeiten durch die Faser. Beim Empfänger kommen diese Signalanteile daher zeitlich zueinander verzögert an. Dieser Laufzeiteffekt führt zu einer Verbreiterung des empfangenen Signals und damit zu einer Beeinträchtigung der Übertragungsqualität. Dies kann insbesondere zu einer Erhöhung der Bitfehlerrate führen.

Da der beschriebene Einfluß auf die Doppelbrechung zudem empfindlich von der Wellenlänge abhängt, weist die Lage der Polarisationshauptzustände ("principial states of polarisation" (PSP)) und die Laufzeitdifferenz zwischen den PSP ferner eine ausgeprägte Wellenlängenabhängigkeit auf. Dies bezeichnet man auch als PMD zweiter Ordnung (SOPMD oder PMD2).

In Fig. 13 ist der Einfluß einer PMD-behafteten optischen Übertragungsstrecke auf ein binäres Datensignal dargestellt. Das Signal wird mit einem Polarisationszustand $SOP_{IN}$ in das Übertragungssystem eingekoppelt, welcher nicht mit einem Eingang-PSP desselben zusammenfällt. Folglich kommt es zu einer Leistungsaufteilung des optischen Signals in die beiden orthogonalen PSP. Aufgrund der unterschiedlichen Gruppengeschwindigkeiten der PSP1- und der PSP2-Mode kommt es zu einer Gruppenlaufzeitverzögerung, welche als differentielle Gruppenlaufzeit (DGD) bezeichnet ist und welche die PMD erster Ordnung darstellt. Sie äußert sich in Fig. 13 in einem zeitlichen Versatz der PSP1-zu der PSP2-Mode. Die SOPMD führt zusätzlich zu einer Verbreiterung jeder einzelnen PSP-Mode.

Aus den genannten Effekten resultiert ein zeitlich fluktuierendes wellenlängenabhängiges PMD-Verhalten mit Zeitkonstanten im ms-Bereich bis hin zum Minuten-Bereich. Derartige PMD-bedingte Verzerrungen in optischen Übertragungssystemen müssen für hochratige Datenübertragungen kompensiert werden, um die Signalqualität zu erhalten. Hierfür - aber auch in Alleinstellung - werden PMD-Emulatoren sowie PMD-Meßvorrichtungen benötigt.

Wie bereits oben dargestellt wurde, läßt sich die PMD eines Übertragungssystems vereinfacht durch den quadratischen Mittelwert ihrer wellenlängenabhängigen DGD beschreiben. Ebenso wellenlängenabhängig präsentieren sich die Eingangs-PSP und die Ausgangs-PSP dieser Faser. Die für eine Emulationsvorrichtung relevante Situation läßt sich in erster Näherung durch die DGD und die Ausgangs-PSP bei der Mittelwellenlänge $\lambda_0$ des optischen Signals beschreiben.

Die Aufgabe einer Emulationsvorrichtung, welche insbesondere in einem PMD-Kompensator Verwendung finden soll, ist es, durch möglichst genaue inverse Nachbildung der DGD der Übertragungsstrecke eine gleich große DGD mit entgegengesetzten PSP entgegenzuschalten. Dabei muß der schnelle Ausgangs-PSP der Übertragungsstrecke mit dem langsamen Eingangs-PSP der Emulatorstrecke zusammenfallen und umgekehrt.

Für eine umfassende Emulationsvorrichtung muß somit in erster Näherung

1. eine einstellbare DGD generierbar sein und
2. die PSP dieser einstellbaren DGD in alle möglichen Richtungen drehbar sein.

In zweiter Näherung sollte eine wellenlängenabhängige DGD mit wellenlängenabhängigen PSP generierbar sein, wobei die PSP wieder frei drehbar sein müssen.

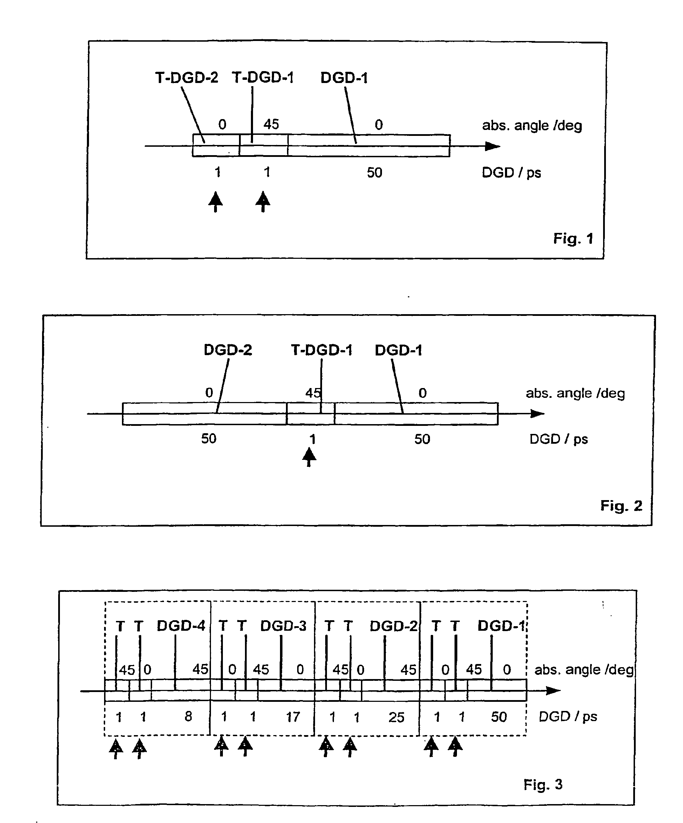

Emulationsvorrichtungen, welche den obigen Anforderungen in unterschiedlichem Umfang genügen, werden mit Bezug auf die Figuren 1 bis 7 nachfolgend beschrieben.

Hierbei weisen alle zu beschreibenden Ausführungsformen erfindungsgemäßer Emulationsvorrichtungen vorzugsweise Anordnungen aus polarisationserhaltenden Fasern (PMF) auf, die über Faserspleißverbindungen (sog. Spleiße) miteinander verbunden sind. Gleichermaßen ist jedoch auch beispielsweise eine Verwendung doppelbrechender Kristalle sowie kurzer SM-Faserstücke mit vorbestimmter Winkelorientierung der "Einflußelemente" (z.B. Faserquetscher und/oder -stretcher) denkbar. Jeder Spleiß realisiert eine feste relative Verdrehung zwischen den Doppelbrechungsachsen beteiligten PM-Fasern. Vorzugsweise beträgt der Verdreh- bzw. Orientierungswinkel angrenzender PM-Faserstücke 45°. Durch die Verwendung des gleichen Fasertyps ergibt sich vorteilhafterweise eine kleine Spleißdämpfung der Emulationsvorrichtung.

Vorzugsweise werden mittels den langen PMF-Stücken eine DGD von ca. 5 ps bis 100 ps, besondes bevorzugt 10 ps bis 50 ps, realisiert. Kurze PMF-Stücke (DGD im Bereich von etwa 0.005 ps bis 5 ps, besonders bevorzugt 0.1 ps bis 1 ps) werden vorzugsweise derart ausgelegt, daß sie über geeignete "Einflußelemente" in ihrer DGD veränderbar werden und so als PSP-Transformatoren wirken. Die geringe DGD dieser variablen DGD-Elemente ist dabei von untergeordneter Bedeutung gegenüber den DGD-Elementen mit vorbestimmter bzw. vorbestimmbarer DGD.

In Fig. 1 ist eine erste Ausführungsform einer erfindungsgemäßen Emulationsvorrichtung dargestellt, welche die Emulation einer Übertragungsstrecke mit einer vorbestimmten DGD und einer einstellbaren PSP ermöglicht.

Die Emulationsvorrichtung weist ein langes und zwei vergleichsweise kurze PM-Faserstücke auf. Das lange PM-Faserstück DGD-1 stellt ein DGD-Element dar, welches eine DGD von beispielsweise 50 ps aufweist. Die kurzen PM-Faserstücke T-DGD-1 und T-DGD-2 weisen demgegenüber nur DGDs von jeweils beispielsweise einer ps auf, sind jedoch jeweils mit einem "Einflußelement", über welches die DGDs von T-DGD-1 und T-DGD-2 gezielt geändert werden können, ausgestattet. Als Einflußelemente können beispielsweise mechanische Stellelemente, vorzugsweise Faserquetscher und/oder -stretcher Verwendung finden. Aufgrund der variablen DGD von T-DGD-1 und T-DGD-2 wirken diese als Polarisationstransformationselemente. In Fig. 1 (und den nachfolgenden Figuren) sind die "Einflußelemente", welche genau einen Polarisationstransformationsfreiheitsgrad darstellen, durch nach oben gerichtete Pfeile unter den PM-Faserabschnitten schematisch dargestellt.

In Fig. 1 erzeugt das DGD-Element DGD-1 eine feste DGD deren Eingangs-PSP den Hauptachsen der PMF (linear 0 und 90°) entspricht. Das davor befindliche Polarisationstransformationselement T-DGD-1 ist durch die 45° verdrehten Doppelbrechungsachsen immer in der Lage, diese lineare PSP in PSPs zu verwandeln, die auf einem Großkreis der Poincarä-Kugel liegen, welcher durch die Punkte H — R — V — L führt. Falls die übliche Definition der Stokes-Vektoren zugrunde gelegt wird (vgl. beispielsweise "Principles of Optics", Max Born und Emil Wolf, 7. Auflage, Cambridge University Press 1999, Seite 33), schneidet dieser Großkreis die Stokes-Vektoren $S_1$ und $S_3$.

Die so auf dem Großkreis frei beweglichen Eingangs-PSPs (aus der Sicht des Elementes T-DGD-1) werden nun durch das Element T-DGD-2 erneut transformiert und zwar derart, daß eine Drehung um die Achse H — V, d.h. um den Stokes-Vektor $S_1$, auf der Poincaré-Kugel erfolgt. Der Kreis mit den Eingangs-PSP wird folglich so gedreht, daß er die gesamte Oberfläche der Poincare-Kugel abdeckt. Damit weist die Gesamtanordnung der beiden Polarisationstransformationselemente T-DGD-1 und T-DGD-2 mit dem DGD-Element DGD-1 eine universell einstellbare (Eingangs-)PSP bei einer festen DGD (von in diesem Beispiel. 50 ps) auf.

Im Stand der Technik wurden mehrfach Emulationsvorrichtungen vorgeschlagen, die einen vollständigen bzw. allgemeinen Polarisationssteller (z.B. einen geeigneten vielstufigen Faserquetscher) in Serie mit einem DGD-Element schalten. Als allgemeiner Polarisationssteller wird hierbei eine Einrichtung verstanden, die jeden beliebigen Polarisationszustand in jeden anderen beliebigen Zustand transformieren kann.

Nachteilig bei diesen Emulationsvorrichtungen ist, daß hier stets ein eindeutiger und stabiler Zusammenhang zwischen den PSP der DGD und den Achsen des davor befindlichen Stellelements fehlt. Ursächlich hierfür ist die zufällige Polarisationstransformation einer vergleichsweise langen Verbindungsfaser, bei welcher es sich typischerweise um eine SMF handelt und deshalb auf Lage- und/oder Temperaturänderungen empfindlich reagiert.

Bei derartigen herkömmlichen Emulationsvorrichtungen sind daher Fälle denkbar, die zu einer Wirkungslosigkeit des letzten "Einflußelements" des vielstufigen Polarisationsstellers führen, weil dessen Achsen durch die Transformation der Verbindungsfaser mit den Achsen des DGD-Elementes zusammenfallen und somit eine "Entartung" auftritt. Um somit eine universelle, d.h. alle möglichen Polarisationszustände abdeckenden PSP-Einstellung zu garantieren, wird daher im Vergleich zu der anhand von Fig. 1 beschriebenen Ausführungsform stets mindestens ein zusätzliches "Einflußelement" (beispielsweise ein zusätzlicher Faserquetscher) benötigt. Während die beschriebene Ausführungsform mit zwei variablen DGD-Elementen auskommt, benötigen herkömmliche Emulationsvorrichtungen, welche gleiche Emulationsmöglichkeiten aufweisen, mindestens drei derartige Elemente.

Ein besonderer Vorteil der ersten Ausführungsform der erfindungsgemäßen Emulationsvorrichtung ist, daß diese vorzugsweise lediglich PM-Faserelemente und keine Verbindungsfaserelemente gibt. Alle Sektionen bestehen somit aus PMF die ihre Achsenrichtung auch bei Faserbewegung und Temperaturänderungen beibehalten. Eine beliebige Einstellung der Eingangs-PSP ist in jedem Fall mit nur 2 Stellelementen gewährleistet.

Alternativ dazu ist es möglich, die PM-Faser der Polarisationstransformationselemente durch SMF zu ersetzen unter der Voraussetzung, daß die feste Zuordnung der Achsenlage von DGD-1 Element und den Transformationselementen T-DGD-1 und T-DGD-2 erhalten bleibt. Dies kann gewährleistet werden, indem die PMF des DGD-Elements DGD-1 bis dicht an das Einflußelement von T-DGD-1 herangeführt wird und der Verdrehwinkel zwischen der Doppelbrechungsachse des DGD-Elements DGD-1 und der Orientierungsachse des Einflußelementelements durch eine konstruktive Neigung herbeigeführt wird. Ist das Einflußelement der Polarisationstransformationselemente T-DGD-1 bzw. T-DGD-2 beispielsweise ein mechanischer Faserquetscher oder -stretcher, so handelt es sich bei der Orientierungsachse des Einflußelements um die Quetschachse des Faserquetschers- bzw stretchers. Damit keine zufällige Polarisationstransformation durch Polarisationstransformationselemente, welche SMF verwenden, eintritt, muß das verwendete SMF-Stück derartig kurz sein, daß zufällige und unerwünschte Polarisationstransformationen durch die SMF vernachlässigbar sind.

Durch diese Maßnahme können alle bisher beschriebenen T-DGD-Elemente, also T-DGD-Elemente bzw. T-Elemente, die auf PMF basieren, auch durch SMF ersetzt werden. Die Spleißwinkel von vorzugsweise 45° müssen bei Einsatz von SMF als Transformationselement lediglich durch konstruktive Maßnahmen, die eine geometrische Neigung von vorzugsweise 45° zwischen den einzelnen Quetschachsen der Faserquetscher gewährleisten, ergänzt werden.

In Fig. 2 ist eine zweite Ausführungsform einer erfindungsgemäßen Emulationsvorrichtung dargestellt. Diese Ausführungsform zeichnet sich dadurch aus, daß mit lediglich einem einzigen Polarisationstransformationselement T-DGD-1 eine einstellbare DGD generierbar ist. Basis bilden die beiden DGD-Elemente DGD-1 und DGD-2, die vorzugsweise die gleiche Größe aufweisen. Denkbar sind jedoch auch ungleiche DGD-Werte.

Das Transformationselement T-DGD-1 ist in der Lage, die Eingangs-PSP des Elementes DGD-1 mit den Ausgangs-PSP des Elementes DGD-2 derart zu verknüpfen, daß einmal die Summe DGD-1 + DGD-2 und anderenfalls die Differenz DGD-1 - DGD-2 entsteht. Durch kontinuierlichen Übergang von Summation zu Subtraktion können alle Zwischenwerte eingestellt werden. Diese Eigenschaft hat das Polarisationstransformationselement T-DGD-1 deshalb, weil es mit einem von Null Grad verschiedenen Verdrehwinkel mit den zwei benachbarten DGD-Elementen DGD-1 und DGD-2 verbunden ist. Bevorzugt beträgt der Verdrehwinkel 45°. Gleichwertig sind die absoluten Winkeleinstellungen 0 - 45 - 0 und 0 - 45 - 90 Grad der Verdrehwinkel zwischen den drei DGD-Elementen. Die festen Spleißwinkel von vorzugsweise 45° garantieren in jedem Fall eine vollständige Transformation zwischen dem Summations- und Subtraktionspunkt.

Alternativ kann das T-DGD-1 Element durch ein kurzes Stück SMF ersetzt werden, wenn die benachbarten DGD-Elemente dicht an die SMF herangeführt werden, so daß keine weiteren Polarisationstransformationen auftreten. Die Spleißwinkel von vorzugsweise 45° weichen einer geometrischen Neigung von 45° zwischen der Quetschachse des Faserquetschers und den Hauptachsen beider PMF-Elemente.

Die in Fig. 3 dargestellte Ausführungsform einer erfindungsgemäßen Emulationsvorrichtung zeigt sinngemäß eine kaskadierte Anordnung von vier Emulationsvorrichtungen gemäß der Ausführungsform von Fig. 1. Jede Emulationsvorrichtung weist somit ein DGD-Element (DGD-1 bis DGD-4) und zwei vorgeschaltete Polarisationstransformationselemente T (Fig. 3 bzw. T-DGD gemäß Fig. 1) zum Eindrehen der PSP auf. Die Größe der DGD-Elemente kann gleich, gestaffelt oder anderweitig gewählt werden. Bevorzugt ist die Staffelung der DGD-Werte derart ausgeführt, daß von Null bis zur Gesamtsumme der DGD-Werte alle Zwischenwerte einstellbar sind.

Ein DGD-Vektor besteht aus einem Vektor mit der Länge DGD und der Richtung eines PSP (z.B. der schnellen PSP). Jede in Fig. 3 gestrichelt dargestellte "Basisemulationseinheit" kann somit vorteilhafterweise einen DGD-Vektor generieren. Die Kaskadierung von unabhängigen, beliebig drehbaren PMD Vektoren erlaubt eine größere Emulationsflexibilität, so daß selbst das PMD-Verhalten komplexer Übertragungsstrecken exakt nachgebildet werden kann. Bei der darstellten Ausführungsform sind DGD-Werte von 0 bis zur Summe der Einzel-DGD-Werte einstellbar und es sind PMD-Effekte höherer Ordnung generierbar. Die größere Anzahl von Emulationsfreiheitsgraden erlaubt eine bessere Anpassung an die PMD der zu kompensierenden Faserstrecke als es mit einem einzelnen einstellbaren DGD-Glied möglich wäre. Im Gegensatz zu im Stand der Technik beschriebenen kaskadierten Emulatoranordnungen ist diese Ausführungsform einer erfindungsgemäßen Emulationsvorrichtung jedoch ökonomisch, weil pro Kaskade nur 2 Stellelemente (d.h. beispielsweise zwei Faserquetscher) für eine allgemeine PSP-Einstellung ausreichen.

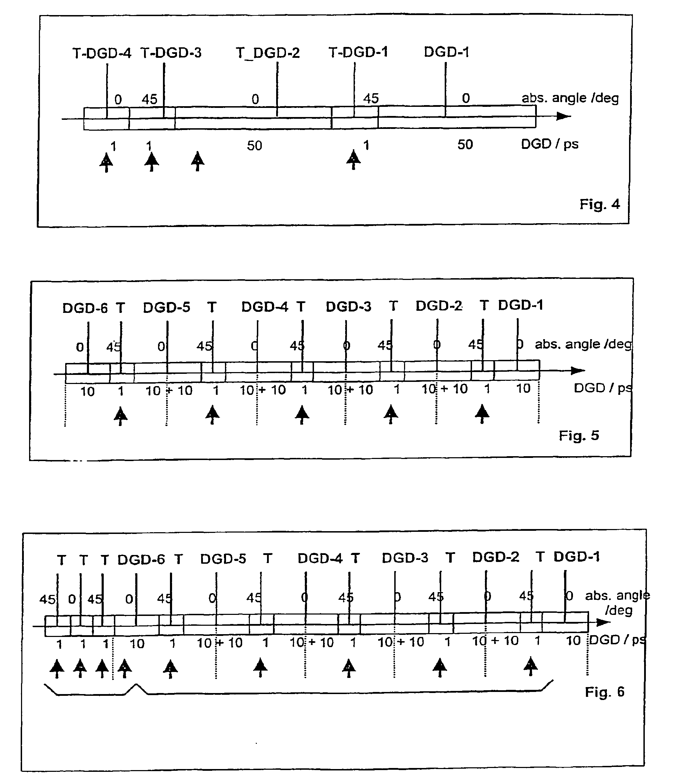

Die in Fig. 4 dargestellte Ausführungsform einer erfindungsgemäßen Emulationsvorrichtung stellt eine Weiterentwicklung der anhand von Fig. 2 beschriebenen Emulationsvorrichtung dar. Ziel ist es, bei der Emulationsvorrichtung gemäß Fig. 4 die Eingangs-PSP universell einstellbar zu machen, d.h. für beliebige gewünschte Polarisationszustände anpaßbar zu machen.

Dazu wird das DGD-Element DGD-2, bei welchem es sich in Fig. 2 um ein DGD-Element mit (fester) vorbestimmter DGD handelt, durch ein variables DGD-Element T-DGD-2 ersetzt. Zusätzlich werden zwei weitere Polarisationstransformationselemente T-DGD-3 und T-DGD-4 im optischen Signalweg vorgeschaltet.

Durch diese drei zusätzlichen Einfluß- bzw. Stellelemente, welche wiederum durch Pfeile angedeutet sind, sind die Eingangs-PSP der Anordnung frei in jede Richtung drehbar. Allein durch die beiden vorderen Polarisationstransformationsglieder gelingt dies nicht, weil die restliche Anordnung nach Fig. 2 keine festen, sondern von der Stellung des variablen DGD-Elementes T-DGD-1 abhängigen PSP aufweist.

Das variable DGD-Element T-DGD-2 gewährleistet in jedem Fall, daß die Anordnung bestehend aus T-DGD-2, T-DGD-1 und DGD-1 immer Eingangs-PSP erhalten, die das variable DGD-Element T-DGD-3 in PSP auf einem Großkreis der Poincaré-Kugel und schließlich das variable DGD-Element T-DGD-4 auf alle möglichen Oberflächenpunkte der Poincare-Kugel (d.h. sämtliche Polarisationszustände) abbilden kann.

In Fig. 5 ist eine weitere Ausführungsform einer erfindungsgemäßen Emulationsvorrichtung dargestellt. Diese beruht auf der in Fig. 2 gezeigten Ausführungsform, welche derart weiterentwickelt wird, daß mehrere ähnliche Anordnungen kaskadiert werden. Dabei "verschmelzen" jeweils zwei feste DGD-Elemente zu einem DGD-Element mit der Summe der DGD-Werte.

Diese Ausführungsform kann, wenn die DGD-Werte wie in der Figur beispielhaft angegeben gewählt werden, eine DGD von 0 ... 100 ps einstellen. Sie hat damit den gleichen Stellbereich wie die anhand von Fig. 2 beschriebene Ausführunsform unterscheidet sich aber durch wesentliche Merkmale.

Die Ausführungsform gemäß Fig. 2 erzeugt bei einer mittleren Einstellung Eingangs-PSPs, die streng periodisch über der Wellenlänge sind. Beispielsweise bei einer DGD von 50 ps pro DGD-Element beträgt die PSP-Periode nur 0,16 nm und entspricht damit gerade der optischen Bandbreite eines 10 Gb/s Signals. Je höher die DGD-Werte der einzelnen DGD-Elemente gewählt werden, desto kleiner ist die PSP-Periode.

Kleine PSP-Perioden können sich jedoch nachteilig auf die Einstellbarkeit der Emulationsvorrichtung auswirken. Dem liegt die Tatsache zugrunde, daß nur dann eine gute PMD-Emulation (bzw. PMD-Kompensation) einer Übertragungsstrecke erreicht wird, wenn diese ähnlich starke PSP-Schwankungen zeigt, wovon im allgemeinen nicht ausgegangen werden kann. Die in Fig. 5 dargestellte Ausführungsform ist daher vorteilhaft, da durch mehrere einzelne DGD-Elemente, die durch die Polarisationstransformationselemente T verbunden sind, eine wesentlich vielfältigere Gestaltung möglich ist. So können beispielsweise DGD-Werte von 0, 20, 40, 60, 80, und 100 ps eingestellt werden, die keinerlei PSP-Variationen über der Wellenlänge aufweisen (reine PMD 1. Ordnung). Dies ist immer dann der Fall, wenn alle Transformationselemente ihre benachbarten DGD-Sektionen (10ps) jeweils zur Summe oder Differenz verbinden.

Darüber hinaus besteht auch die Möglichkeit, eine PMD höherer Ordnung zu generieren. Dabei stehen eines oder mehrere Polarisationstransformationselemente in einer Zwischenposition. Es sind also DGD-Werte einstellbar, die ebenfalls 20, 40, 60 oder 80 ps DGD aufweisen, aber zusätzlich eine wellenlängenabhängige DGD und PSP liefern. Alle DGD-Werte zwischen 0 und der DGD-Summe (100 ps) sind einstellbar.

Durch diese vielfältigen Variationsmöglichkeiten sind die Voraussetzungen für eine wesentlich bessere und breitbandigere Anpassung von Übertragungsstrecke (z.B. eine Faserstrecke) und der PMD-Emulationsvorrichtung bei dessen Verwendung in einem PMD-Kompensator gegeben. Ein PMD-Kompensator (kurz PMDC, PMD compensator), welcher eine derartige PMD-Emulationsvorrichtung verwendet, kann - entsprechende Meß- und Regelvorrichtung vorausgesetzt - auch PMD höherer Ordnung kompensieren.

Wenn eine Emulationsvorrichtung in einem PMD-Kompensator verwendet werden soll, so sollte sie vorzugsweise eine sogenannte endlose Polarisationsregelung ermöglichen. Hierunter wird die Fähigkeit von Polarisationstransformationselementen verstanden, keine Polarisationssprünge zu erzeugen, wenn die Stellelemente der Polarisationstransformationselemente an ihre Einstellbereichsgrenze gelangen. Eine endlose Polarisationsregelung muß vielmehr eine kontinuierliche stetige Polarisationseinstellung gewährleisten. Polarisationssprünge würden in optischen Übertragungssystemen zu Übertragungsfehlern, d.h. zu einer nachteiligen Erhöhung der Bitfehlerrate führen.

Demgegenüber ist eine endlose Einstellung der DGD nicht nötig, da immer nur zwischen einer minimalen (0 ps) und einer maximalen (z.B. 100 ps) hin und her gestellt werden muß. Ein Problem kann jedoch entstehen, wenn die Stellelemente selbst eine große Drift (z.B. Temperaturdrift) aufweisen. Wird z.B. von einem einstellbaren DGD-Element die maximale DGD von beispielsweise 20 ps abverlangt, muß das Transformationselement T ständig die gleiche Polarisationsdrehung (z.B. von 0°) aufrechterhalten. Gelangt aber das Stellelement (z.B. der Faserquetscher) an seine Bereichsgrenzen, wird eine DGD von weniger als 20 ps erzeugt. Bis zum nächsten Maximum bei 20 ps überstreicht das DGD-Element auch Werte von minimal 0 ps. Folglich ist der maximale Fehler gleich der maximalen DGD (in dem gewählten Beispiel 20 ps).

Eine Ausführungsform der erfindungsgemäßen Emulationsvorrichtung, welche eine derartige endlose Polarisationsstellmöglichkeit aufweist, ist in Fig. 6 dargestellt. Die Emulationsvorrichtung weist ingesamt fünf Sektionen mit 10 ps + Polarisationstransformationselement + 10 ps auf, wobei die Zahlenwerte beispielhaft zu verstehen sind. Es ist also eine Gesamt-DGD von maximal 100 ps einstellbar. Unter Berücksichtigung der oben beschriebenen Drift-Effekte muß aber damit gerechnet werden, daß ein DGD-Element nicht 20 ps sondern kurzzeitig nur 0 ps generiert. Die Gesamt DGD der Anordnung würde damit auf 0 ps bis 80 ps eingeschränkt werden.

Um diese Einschränkung zu überwinden ist es ausreichend, eine zusätzliche einstellbare DGD-Sektion mit 0 ps bis 20 ps vorzusehen. Damit sind folglich maximal 120 ps erreichbar. Falls oben beschriebene Drifterscheinungen auftreten sollten, sind noch ausreichende 0 ps bis 100 ps einstellbar. Jede einstellbare DGD-Sektion ist damit durch alle anderen ersetzbar. Die Regelung sorgt dafür, daß gleichzeitig nicht mehr als eine Sektion einen "Reset", d.h. eine rückstellende Polarisationsbewegung, ausführt.

In Fig. 6 wird somit ein vierstufiger Endlos-Polarisationssteller, der aus 4 PMF-Sektionen aufgebaut ist, verwendet. Da eine Sektion jedoch direkt in das vordere DGD Element DGD-6 integriert wird, sind - im Gegensatz zu herkömmlichen Emulationsvorrichtungen - nur noch drei weitere PMF Sektionen vorzusehen.

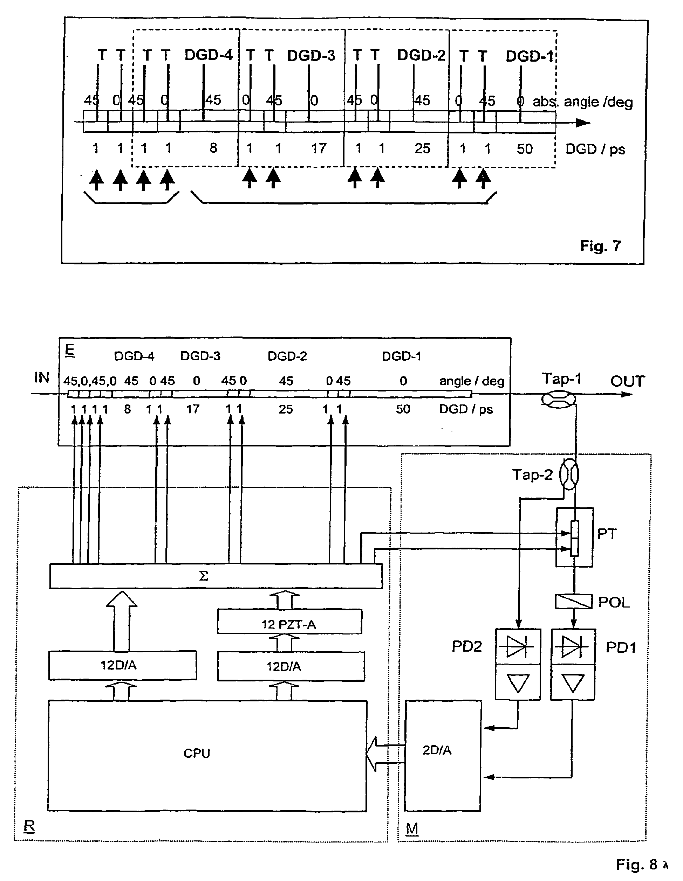

In Fig. 7 ist eine Weiterentwicklung der anhand von Fig. 3 beschriebenen Ausführungsform der erfindungsgemäßen Emulationsvorrichtung gezeigt, welche eine endlose Polarisationsregelung ermöglicht. Wie oben bereits beschrieben worden ist, ist eine endlose DGD-Einstellung nicht notwendig, da immer nur zwischen einer minimalen (0 ps) und einer maximalen (z.B. 100 ps) DGD hin und her gestellt wird.

Die Ausführungsform gemäß Fig. 3 hat den Vorteil, daß die PSP der Gesamtanordnung bereits durch zwei Polarisationstransformationselemente am Eingang universell bestimmt werden kann. Um die Polarisationstransformationen endlos ausführen zu können, müssen somit lediglich zwei weitere Polarisationstransformationselemente hinzugefügt werden. Somit kommt ein vierstufiger Endlos-Polarisationssteller zum Einsatz, der aus vier PMF-Sektionen aufgebaut ist.

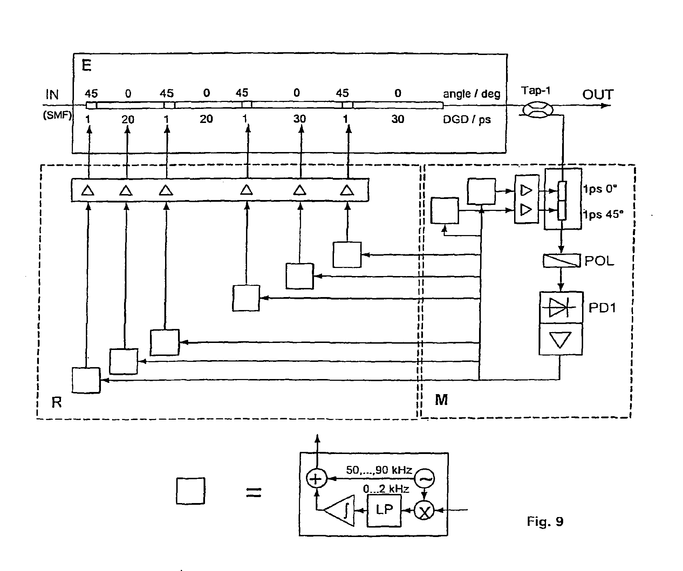

In Fig. 8 ist eine besonderes bevorzugte Ausführungsform einer erfindungsgemäßen Kompensationsvorrichtung gezeigt. Diese Kompensationsvorrichtung (PMDC) umfaßt eine erfindungsgemäße Emulationsvorrichtung E und eine erfindungsgemäße Meßvorrichtung M, welche jeweils mit einer neuartigen Regelvorrichtung R verbunden sind. Die Regelvorrichtung steuert hierbei abhängig von dem Meßausgangssignal der Meßvorrichtung M die Emulationsvorrichtung E derart, daß diese eine DGD gleichen Betrags aber inverser Richtung PSP zu derjendigen der zu kompensierenden Übertragungsstrecke aufweist. Ein PMD-verzerrte optisches Signal, welches in den Emulatoreingang IN eingegeben wird, verläßt den Emulatorausgang OUT in PMD-kompensierter oder zumindest PMD-minimierter Signalform. Zu beachten ist, daß eine Steuer- und Ausgabeeinrichtung der Meßvorrichtung M bei der in Fig. 9 dargestellten Ausführungsform in dem DSP (digitaler Signalprozessor) integriert ist. Wenn die Meßvorrichtung in Alleinstellung verwendet werden soll, kann jedoch die Steuer- und Ausgabeeinrichtung jedoch teil der Meßvorrichtung selbst sein.

Um die PMD-bedingte Verzerrrung eines optischen Signals wirksam kompensieren zu können, muß zunächst in einem PMDC die Größe der PMD detektiert werden. Dies erfolgt durch die Meßvorrichtung M. Über einen Strahlteiler Tap-1 (einen sogenannten Tap) wird ein kleiner Leistungsanteil des optischen Signals am Emulatorausgang OUT (ca. 1% bis ca. 5%) abgezweigt und nachfolgend in zwei Signale mit ungefähr gleicher Intensität mittels eines zweiten Leistungsteilers Tap-2 aufgespalten. Ein derartiger Signalanteil wird direkt zu einem Fotodetektor PD2 geleitet, welcher auf diese Weise die Gesamtintensität $P_{ges}$ (bzw. die optische Gesamtleistung) des optischen Signal detektiert. Der andere optische Signalanteil gelangt über ein Polarisationstransformationselement PT zu einem Polarisator POL. Die durch den Polaristor POL transmittierte optische Restintensität $P_{pol}$ wird von einem weiteren Fotodetektor PD1 detektiert. Die Fotodetektoren sind dabei derart ausgelegt, daß sie die optische Leistung über den gesamten relevanten Wellenlängenbereich erfassen.

Wie oben bereits ausführlich dargestellt worden ist, ist es das Ziel der Regelung durch die Regelvorrichtung R, die optische Leistung $P_{pol}$ nach dem Polarisator zu minimieren. Dieses Regelziel ist gleichbedeutend mit einem hohen Polarisationsgrad DOP, der wiederum mit einer Minimierung der PMD-bedingten Verzerrungen korrespondiert. Eine Leistung $P_{pol} = 0$ bedeutet, daß alle Spektralanteile des Datensignals mit der gleichen Polarisation (nämlich der zur Durchlaßrichtung des Polarisators orthogonalen Polarisation) auftreten.

Dem Regelmechanismus liegt ein Modulations- bzw. Ditherverfahren zugrunde, wie es beispielsweise bei Lock-In Verstärkern eingesetzt wird. Die Regelung kann mit einem digitalen Signalprozessor (DSP) ausgeführt werden. Alternativ dazu ist es jedoch auch möglich, die Regelvorrichtung als analoge Schaltung auszubilden. Eine derartige Ausführungsform ist in Fig. 9 dargestellt. Die quadratischen Platzhalter bezeichnen in Fig. 9 übliche phasensensitive Verstärkungs- und Addiervorrichtungen, wie sie im unteren Teil von Fig. 9 schematisch dargestellt sind.

Nachfolgend erfolgt anhand von Fig. 8 eine Beschreibung einer Regelvorrichtung, welche einen DSP einsetzt.

Dieser DSP übernimmt folgende Aufgaben:

- fortlaufende Messung der optischer Gesamtleistung $P_{ges}$ und der Leistung $P_{pol}$ nach dem Polarisator PD1 in Zeitrahmen von beispielsweise 256 µs;
- Generierung von (in diesem Fall) 12 Modulationsfrequenzen im beispielsweise 3,9 kHz Raster;
- synchrone Berechnung der Regelabweichungen für alle 12 Stellelemente, d.h. für sämtliche bevorzugt verwendeten Faserquetscher der Emulationsvorrichtung E mittels DFT;
- Generierung von 12 Stellsignalen für die Stellelemente der Emulationsvorrichtung E;
- Implementation des Endlosalgorithmus; und
- Überwachungs- und Interface-Funktionen.

Der DSP hat mittels seiner 12 Steuerausgänge die Möglichkeit, alle Stellelemente auf ihre optimale Position zu fahren. Damit dieser Vorgang schnell ablaufen kann wird - wie oben bereits angesprochen - eine Modulationstechnik (Dithering) implementiert. Hierbei wird jedes Stellsignal wird mit einem niederfrequenten Modulationssignal geringer Amplitude überlagert, wobei jedem Stellelement (z.B. jedem Fasenquetscher) eine individuelle Modulationsfrequenz (im Bereich von ca. 50 ... 150 kHz) zugewiesen wird. Die Modulationsfrequenzen können wahlweise durch den DSP (oder auf analoge Weise erzeugt) werden. Über die Modulationsfrequenz ist somit die eindeutige Identifikation des Stellers möglich. Der Frequenzabstand ist mit beispielsweise 3,9 kHz vorzugsweise so gewählt, daß in das Zeitraster von 256 µs ganzzahlige Perioden einer jeden Frequenz passen. Somit ist eine fehlerfreie Kanaltrennung der Modulationskanäle möglich.

Hierfür weist der DSP in folgendem Ausführungsbeispiel folgende Komponenten auf:

einen 2-Kanal-A/D Wandler 2A/D;
ein CPU-Board CPU;
zwei 12-Kanal D/A Wandler 12D/A;
12 Signalverstärker 12PZT-A für die Stellelemente (insbesondere für piezoelektrische Elemente eines Faserquetschers); und
eine Summationseinrichtung Σ.

Die Regelung umfaßt folgende Schritte:

Zunächst wird die polarisierte optische Leistung $P_{pol}(t)$ durch die optische Gesamtleistung $P_{ges}(t)$ dividiert und somit normiert. Das Quotientensignal ist folglich unabhängig von der absoluten Lichtleistung. Außerdem werden störende amplitudenmodulierte Signalanteile, die vom 10 Gb/s Datensignal her stammen, durch Quotientenbildung "herausgekürzt".

Die DFT (diskrete Fouriertransformation) zerlegt das Quotienten-Signal in die 12 Amplituden- und Phasenwerte der Modulationsfrequenzen. Die Phasenlage (0 oder 180°) liefert die Information, ob das Regelziel bei einem höheren oder niedrigeren Stellwert erreicht wird, so daß hieraus vorzugsweise eine Richtungsinformation für die Regelung ableitbar ist. Aus der Amplitude $\hat{A}$ jeder Frequenzkomponente kann die Information über die Größe des Regelschrittes abgeleitet werden. Unter Berücksichtigung der Regelcharakteristik (linearer Fortschritt des Stellwertes liefert eine sinusförmige Leistung $P_{pol}$) kann somit der optimale Regelschritt aus einer Arcussinusfunktion approximiert werden.

$$Schritt = \pm C_1 \arcsin \frac{\hat{A}}{C_2} \qquad C_1, C_2 = \text{Konstanten}$$

Die so berechneten Regelschritte $X_{delta}$ für die 12 Stellelemente werden sodann den bisherigen Stellsignalen zur Erzeugung eines neuen Stellsignals hinzuaddiert und der nächste Regelzyklus beginnt.

$$X_{neu} = X_{alt} + X_{delta}$$

Zur Erzeugung einer "Endlos-Regelung" ist es vorteilhaft, für jedes Stellelement eine "Kostenfunktion" zu generieren, die bei Annäherung des Stellwertes bzw. - signals an die Grenzen des Stellbereiches expotentiell ansteigende Kosten berechnet. Proportional zu diesen Kosten wird der betreffende Steller um einen Betrag x von seinem aktuellen Stellwert zu einem Stellwert in Richtung zur Mitte des Stellbereiches verschoben.

Der Stellbereich eines Stellelements sei: $X_{min}...X_{max}$

Die Mitte des Stellbereiches ist damit: $X_{mittel} = \dfrac{X_{min} + X_{max}}{2}$

Für eine Regelung ohne Endlos-Algorithmus ergibt sich die neue Soll-Position des Stellers zu: $X_{neu} = X_{alt} + X_{delta}$ wobei $X_{delta}$ der berechnete optimale Stellschritt ist.

Der Endlos-Algorithmus läßt jedoch nicht den vollen Schritt zu, sondern generiert einen Rückstellschritt, der umso größer wird, je weiter sich die Soll-Position von der mittleren Position entfernt.

Die Auslenkung von der Bereichs-Mitte ist: $X_{diff} = X_{neu} - X_{mittel}$

Der Rückstellschritt wird proportional zu einer Potenz dieser Auslenkung gewählt.

$$X_{Rück} = \pm \frac{\left| X_{diff} \right|^n}{C}$$

$n = 6$, $C = konst.$

Die tatsächlich an den Steller ausgegebene neue Position ist damit:

$$X_{neu} = X_{alt} + X_{delta} \pm X_{Rück}$$

Das Vorzeichen des Rückstellsignals wird so gewählt, daß es die neue Position immer zur Bereichsmitte verschiebt. Damit wird erreicht, daß die Stellfunktion auf ein anderes, redundant vorhandenes Stellelement übertragen wird, welches im mittleren Teil seines Stellbereiches arbeitet und geringere Kosten generiert. Dieser Algorithmus wird parallel an allen Stellelementen durchgeführt.

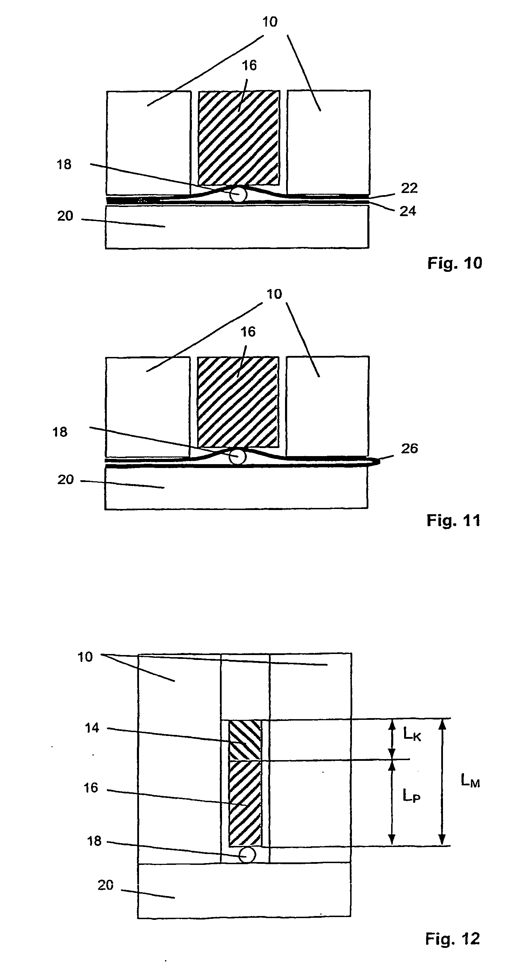

Nachfolgend werden anhand von Fig. 10 bis 12 erfindungsgemäße Faserquetscher beschrieben, welche in Alleinstellung oder in einer Emulations- oder Meßvorrichtung Verwendung finden können.

Herkömmliche Faserquetscher zeigen eine sehr eingeschränkte Nutzbarkeit, wenn eine (oben beschriebene) Modulationstechnik zum Einsatz kommen soll. Bei der Modulationstechnik, welche auch als Dithertechnik bezeichnet wird, wird das Stellelement mit einer Frequenz (etwa 50 ... 150 kHz) um einen kleinen Betrag um seinen Stellwert herum periodisch moduliert, um über meßtechnische Mittel die Richtung und die Amplitude für eine optimalen Regelung zu ermitteln. Die Modulation erfordert einen weiten Frequenzbereich, in dem Betrag und Phase der tatsächlich bewerkstelligten Polarisationsmodulation näherungsweise konstant sind. Auf keinen Fall sind Resonanzstellen sowie Amplituden- oder Phasensprünge tolerierbar.

Um die praktischen Meßkurven von Faserquetschern dahingehend zu optimieren, werden Dämpfungselemente vorgesehen, die jede andere Schwingung außer der gewünschten (in Ausdehnungsrichtung des Piezos) unterdrücken. Als besonders geeignet haben sich elastische Kunststofffolien, Gummi und/oder Papier hierfür erwiesen. Diese Materialien können zwischen den Seitenflächen des Piezos und der umgebenden Konstruktion eingesetzt werden, um Querschwingungen zu unterdrücken.

In den Figuren 10 und 11 sind Ausführungsformen eines erfindungsgemäßen Faserquetschers gezeigt, welche eine Verrutsch- bzw. Verdrehsicherung gegen einen nachteiligen Einfluß eines Verrutschens bzw. Verdrehens der Faser aufweisen. Die Verwendung vom PMF in den Faserquetschern erfordert vor der Montage ein Eindrehen auf die richtige Achsenlage. Während des Aufbringens der mechanischen Vorspannung und während Betriebs und sogar bei mechanischer Schockbelastung darf die voreingestellte Lage nicht verloren gehen.

Überraschenderweise ist ein besonders geeignetes Mittel zur Aufrechterhaltung der Faserorientierung zumindest eine Folie, vorzugsweise eine Metallfolie, welche zwischen die Faser 18 und den Quetschstempel 16 gelegt wird. Beide Metallfolien 22 und 24 sind vorzugsweise beidseitig der Faser 18 mit dem Lagergehäuse 10 verschraubt. Ein Verdrehen der Faser 18 ist sogar dann ausgeschlossen, wenn das piezoelektrische Element 16 auf der oberen Metallfolie 22 verrutscht.

Auf die untere Folie 24 kann auch verzichtet werden, da sie keine Funktion bezüglich eines Verrutschens erfüllt. Alternativ können beide (Metall-)folien aus einem Stück 26 durch Umfalten hergestellt werden. Der Falz verringert zusätzlich die Gefahr des Verrutschens. Ein derartiger Faserquetscher ist in Fig. 10 dargestellt.

Die Folien 22, 24, 26 bieten außerdem den Vorteil, daß sie eine sehr glatte Oberfläche besitzen und damit die Rauhigkeit der unteren Druckplatte 20 und des piezoelektrischen Elements kaschieren. Die Anforderungen bezüglich der Oberflächenrauhigkeit können reduziert werden, was wiederum Produktionskosten spart.

Eine weitere Voraussetzung für eine reproduzierbare und gleichbleibende Funktion der Faserquetscher über einen weiten Temperaturbereich ist ferner ein temperaturunabhängiges Verhalten, so daß die Faserquetscherkonstruktion eine passive Temperaturkompensation aufweisen muß. Anderenfalls ist die mechanische Vorspannung auf die Faser und der Stellbereich abhängig von der Temperatur. Im Extremfall kann bei hoher Temperatur, wenn die Metallkonstruktion des Faserquetschers sich ausdehnt, die mechanische Vorspannung ganz verlorengehen. Die Faser ist dann unbelastet und der Polarisationssteller erzielt keine Wirkung mehr. Im anderen Extremfall kann bei niedriger Temperatur, wenn sich die Metallkonstruktion zusammenzieht, eine zu hohe Last auf die Faser, die zum Bruch führen kann, entstehen.

Die Konstruktion der Faserquetscher sollte möglichst aus einem Material bestehen, welches den gleichen thermischen Ausdehndungskoeffizienten wie das verwendete piezoelektrische Element aufweist. Zu üblichen piezoelektrische Materialien vergleichbare thermische Ausdehnungskoeffizienten (+1..+3 ppm/°C) haben jedoch nur keramische Materialien. Diese sind aufgrund ihrer Bruchempfindlichkeit allerdings nur wenig zuverlässig und nur bedingt für einen Einsatz in Faserquetschern geeignet.

Vorteilhaft ist daher eine Konstruktion aus Invar, welches eine spezielle Nickellegierung mit einem für Metalle sehr kleinen thermischen Ausdehnungskoeffizienten ist. Ein besonders gutes Temperaturverhalten ergibt sich aber erst dann, wenn eine Kompensation der Wärmeausdehung vorgenommen wird. Diese Kompensation erfolgt durch eine Gegenschaltung eines Materials mit einem großen thermischen Ausdehnungskoeffiezienten, beispielsweise ein entsprechendes Metall mit hohen Temperaturkoeffizienten $\alpha_K$.

Der Faserquetscher von Fig. 12 weist hierzu den folgenden Aufbau auf. Der Faserquetscher umfaßt ein Lagergehäuse 10, welche vorzugsweise aus Invar oder einem anderen Material mit kleinem thermischen Ausdehnungskoeffizienten besteht. Der Quetschstempel 12 ist an dem Lagergehäuse 10 festgelegt und weist ein thermisch kompensierendes Ausgleichselement 14 auf, an welchem das piezoelektrische Element 16 befestigt ist. In Ausdehnungsrichtung des piezoelektrischen Elements weist das Ausgleichselement eine Länge $L_k$, das piezoelektrische Element eine Länge $L_P$ auf, welche zusammen eine Gesamtlänge $L_M$ ergeben. Das piezoelektrische Element 16 kann einen mechanischen Druck auf die Faser 18 ausüben, welche auf einer unteren Druckplatte 20 abgestützt ist.

Eine passive Temperaturkompensation ist gegeben, wenn die temperaturbedingte Längenausdehnung des piezoelektrischen Elements 16 und des Ausgleichs- bzw. Kompensationselements 14 gleich der Längenänderung der umgebenden Lagerkonstruktion 10 ist:

17

$$\alpha_P * L_P + \alpha_K * L_K = \alpha_M * L_M$$

**Patentansprüche**

1. Emulationsvorrichtung zur Emulation einer Polarisationsmodendispersion (PMD) eines optischen Übertragungssystems, mit

   - einem Emulatoreingang für ein optisches Eingangssignal;
   - zumindest einem steuerbaren doppelbrechenden Polarisationstransformationselement mit einem Transformationselementein- und mit einem Transformationselementausgang, welches zur Polarisationsformation des optischen Signals ausgelegt wird;
   - zumindest einem doppelbrechenden DGD-Element (DGD-1, DGD-2) mit einem DGD-Eingang und einen DGD-Ausgang, wobei das DGD-Element eine differentielle Gruppenlaufzeit DGD zwischen zwei zueinander orthogonal polarisierten Propagationsmoden des DGD-Elements aufweist; und
   - einem Emulatorausgang für ein PMD-verändertes optisches Ausgangssignal,
   **gekennzeichnet durch**
   - zumindest ein in dem Polarisationstransformationselement angeordnetes doppelbrechendes variables DGD-Element (T-DGD-1, T-DGD-2) mit einer zur Transformation der Polarisation einstellbaren differenziellen Gruppenlaufzeitverzögerung $DGD_{var}$, und **durch**
   - zumindest ein weiteres doppelbrechendes DGD- Element (DGD- 2) oder ein weiteres doppelbrechendes variables DGD- Element (T- DGD- 2) mit einer zur Transformation der Polarisation einstellbaren Gruppenlaufzeitverzögerung $DGD_{var}$,

   wobei das doppelbrechende variable DGD-Element oder die doppelbrechenden variablen DGD-Elemente und das doppelbrechende DGD-Element oder die doppelbrechenden DGD-Elemente zwischen dem Emulatorein- und Emulatorausgang derart zueinander angeordnet sind, dass die Doppelbrechungsachsen an Verbindungsstellen am Eingang oder Ausgang des Transformationselements um einen von Null Grad verschiedenen Verdrehwinkel gegenüber den Doppelbrechungsachsen am DGD-Ausgang oder DGD-Eingang verdreht sind.

2. Emulationsvorrichtung nach Anspruch 1, wobei der Quotient $DGD_{var}$ / DGD kleiner als 0,5 und vorzugsweise kleiner als 0,1 ist.

3. Emulationsvorrichtung nach Anspruch 1 oder 2, wobei das Polarisationstransformationselement eine Vielzahl im Signalweg hintereinander angeordneter, doppelbrechender variabler DGD-Elemente umfaßt.

4. Emulationsvorrichtung nach Anspruch 3, wobei benachbarte variable DGD-Elemente der Vielzahl variabler DGD-Elemente derart ausgeordnet sind, daß ihre jeweiligen Doppelbrechungsachsen relativ zueinander um einen von Null Grad verschiedenen Verdrehwinkel verdreht sind.

5. Emulationsvorrichtung nach einem der vorangegangenen Ansprüche, wobei der Verdrehwinkel 30 Grad bis 60 Grad und vorzugsweise ungefähr 45 Grad beträgt.

6. Emulationsvorrichtung nach einem der vorangegangenen Ansprüche, wobei das DGD-Element zumindest einen polarisationserhaltenden Lichtwellenleiter und/oder zumindest einen doppelbrechenden Kristall und das Polarisationstransformationselement zumindest einen polarisationserhaltenden Lichtwellenleiter, zumindest einen doppelbrechenden Kristall und/oder zumindest einen kurzen Monomode-Lichtwellenleiter umfaßt.

7. Emulationsvorrichtung nach Anspruch 6, wobei das Polarisationstransformationselement zumindest ein mechanisches Stellelement umfaßt, welches eine mechanische Wirkung zur Änderung von $DGD_{var}$ ausübt und vorzugsweise einen Faserquetscher und/oder -stretcher umfaßt.

8. Emulationsvorrichtung nach Anspruch 7, wobei der Faserquetscher oder - stretcher ein piezoelektrisches Element aufweist, welches zur Dämpfung von Querschwingungen in einem Lagergehäuse seitlich durch elastische Schwingungsdämpfer geführt ist.

9. Emulationsvorrichtung nach einem der Ansprüche 7 oder 8, wobei der Faserquetscher oder -stretcher ein piezoelektrisches Element aufweist, welches derart über ein thermisch kompensierendes Ausgleichselement an einem Lagergehäuse festgelegt ist, daß der resultierende thermische Ausdehnungskoeffizient der Anordnung des piezoelektrischen Elements und des Ausgleichselements gleich zu derm thermischen Ausdehnungskoeffizient des Lagergehäuses ist.

10. Emulationsvorrichtung nach einem der Ansprüche 7 bis 9, wobei der Faserquetscher einen Quetschstempel aufweist und zwischen der zu quetschenden Faser und dem Quetschstempel eine Metallfolie derart angeordnet ist, daß ein Verdrehen der Faser bei einem Verrutschen des Quetschstempels verhindert wird.

11. Emulationsvorrichtung nach Anspruch 9 oder 10, wobei der polarisationserhaltende Lichtwellenleiter des Potansationstransformationsetements am Transformationselementausgang derart mit dem polarisationserhaltenden Lichtwellenleiter des DGD-Elements am DGD-Eingang verspleißt ist, daß der Verdrehwinkel zwischen den Doppelbrechungsachsen am Transformationselementausgang relativ zu denjenigen am DGD-Eingang ungleich Null Grad ist

12. Emulationsvorrichtung nach einem der vorangegangenen Ansprüche, wobei zwischen dem Emulatoreingang und dem Polarisationstransformationselement ein zweites doppelbrechendes DGD-Element angeordnet ist und zwischen dem Emulatoreingang und dem zweiten DGD-Element ein zweites Polarisationstransformationselement angeordnet ist.

13. Emulationsvorrichtung nach einem der vorangegangenen Ansprüche, wobei zwischen dem Emulatoreingang und dem Emulatorausgang eine Vielzahl von Polarisationstransformationselementen und DGD-Elementen in abwechselnder Reihenfolge angeordnet sind, wobei zumindest eines der Polarisationstransformationselemente aus einem variablen DGD-Element oder höchstens zwei relativ zueinander verdreht orientierten variablen DGD-Elementen besteht.

14. Emulationsvorrichtung nach Anspruch 13, wobei das emulatoreingangsseitige Polarisationstransformationselement aus mehreren, insbesondere höchstens vier relativ zueinander verdrehten variablen DGD-Elementen und die übrigen Polarisationstransformationselemente aus einem variablen DGD-Element oder zumindest zwei relativ zueinander verdrehten variablen DGD-Elementen besteht.

15. Kompensationsvorrichtung zur Kompensation Polarisationsmodendispersions (PMD)-bedingter Verzerrungen in einem optischen Übertragungssystem mit

- einer Emulationsvorrichtung gemäß einem der vorangegangenen Ansprüche, wobei der Emulatoreingang zur Eingabe eines PMD-verzerrten optischen Signals und der Emulatorausgangs zur Ausgabe eines optischen Ausgangssignals ausgelegt ist;
- einer Meßvorrichtung zur Messung der PMD-bedingten Verzerrung des optischen Signals und Ausgabe eines Meßausgangssignals; und
- einer Regelvorrichtung, an der das Meßausgangssignal anliegt und welche die Emulationsvorrichtung derart steuert, daß diese die PMD-bedingte Verzerrung minimiert und bevorzugt vollständig kompensiert.

16. Kompensationsvorrichtung nach Anspruch 15, wobei die Meßvorrichtung zur Messung einer Polarisationsmodendispersions (PMD) - bedingten Verzerrung eines optischen Signals aufweist :

- einen Meßeingang für das optisches Signal;
- zumindest einen Polarisator;
- zumindest ein Polarisationstransformationselement, welches zur Polarisationstransformation des optischen Signals ausgelegt und in dem Signalweg des optischen Signals zwischen dem Meßeingang und dem Polarisator angeordnet ist;
- zumindest einen im Signalweg des optischen Signals hinter dem Polarisator angeordneten Fotodetektor zur Detektion der Intensität $P_{pol}$ des optischen Signals; und
- eine mit dem Polarisationsiransformationselement und dem Fotodetektor verbundene Steuer- und Ausgabeeinrichtung, welche das Polarisationstransformationselement derart steuert, daß die Intensität $P_{pol}$ entweder minimal oder maximal ist und ein der minimalen bzw. maximalen Intensität $P_{pol,min}$ bzw. $P_{pol,max}$ des optischen Signals entsprechendes Meßausgangssignal als Maß für die PMD-Verzerrung des optischen Signals ausgibt.

17. Kompensationsvorrichtung nach Anspruch 16, wobei in der Meßvorrichtung ein zweiter Fotodetektor zur Detektion der Gesamtintensität $P_{ges}$ des optischen Signals vor dem Polarisationstransformationselement vorgesehen ist und die Steuer- und Ausgabeeinrichtung ein der normierten minimalen bzw. maximalen Intensität $P_{pol,min}/ P_{ges}$ bzw. $P_{pol,max}/ P_{ges}$ entsprechendes Meßausgangssignal ausgibt

18. Kompensationsvorrichtung nach Anspruch 16 oder 17, wobei in der Meßvorrichtung das Polarisationstransformationselement zumindest ein variables DGD-Element mit einer zur Transformation der Polarisation einstellbaren differentiellen Gruppenlaufzeitverzögerung $DGD_{var}$ umfaßt.

19. Kompensationsvorrichtung nach Anspruch 18, wobei in der Meßvorrichtung das Polarisationstransformationselement zwei variable DGD-Elemente aufweist, welche derart angeordnet sind, daß deren Doppelbrechungsachsen relativ zueinander um einen von Null Grad verschiedenen Verdrehwinkel verdreht sind.

20. Kompensationsvorrichtung nach Anspruch 18 oder 19, wobei in der Meßvorrichtung die variablen DGD-Elemente jeweils einen polarisationserhaltenden Lichwellenleiter und ein mechanisches Stellelement umfassen, welches eine mechanische Wirkung zur Änderung von $DGD_{var}$ auf den Lichtwellenleiter ausübt und vorzugsweise einen Faserquetscher und/oder -strecher aufweist.

21. Kompensationsvordchtung zur Kompensation Polarisationsmodendispersions (PMD)-bedingter Verzerrungen in einem optischen Übertragungssystem mit

   - einer Emulationsvorrichtung nach einem der Ansprüche 1 bis 14 mit einem Emulatoreingang zur Eingabe eines PMD-verzerrten optischen Signals und einem Emulatorausgang zur Ausgabe eines optischen Ausgangssignals, wobei die Emulationsvorrichtung eine Vielzahl von steuerbaren Polarisationstransformationselementen und eine Vielzahl von DGD-Elementen aufweist;
   - einer Meßvorrichtung zur Messung der PMD-bedingten Verzerrung des optischen Signals und Ausgabe eines Meßausgangssignals; und
   - einer Regelvorrichtung, an der das Meßausgangssignal anliegt und welche die Emulationsvorrichtung derart steuert, daß diese die PMD-bedingte Verzerrrung minimiert und bevorzugt vollständig kompensiert,

   wobei die Regelvorrichtung
   zur Ausgabe eines mit einem periodischen Modulationssignal überlagerten Stellsignals an die Polarisationstransformationselemente,
   zur intensitäts- und phasenrichtigen Detektion entsprechender Modulationsanteile in dem Meßausgabesignal und zur Erzeugung eines neuen Stellsignals abhängig von den detektierten Modulationsanteilen
   ausgelegt ist.

22. Kompensationsvorrichtung nach Anspruch 21, wobei die Modulationsfrequenzen der Modulationssignale für jedes Polarisationstransformationselement verschieden sind und vorzugsweise in einem Frequenzbereich von 20 kHz bis 500 kHz, besonders bevorzugt 40 kHz bis 150 kHz, liegen.

**Claims**

1. Emulation device for emulating a polarization mode dispersion (PMD) of an optical transmission system, including

   - an emulator input for an optical input signal;
   - at least one controllable birefringent polarization transformation element with a transformation element input and a transformation element output, which is designed for polarization formation of the optical signal;
   - at least one birefringent DGD element (DGD-1, DGD-2) with a DGD input and a DGD output, wherein the DGD element has a differential group delay DGD between two propagation modes of the DGD element polarized orthogonally to each other; and
   - an emulator output for a PMD-varied optical output signal,

   **characterized by**

   - at least one birefringent variable DGD element (T-DGD-1, T-DGD-2) disposed in the polarization transformation element, having a differential group delay $DGD_{var}$ adjustable to the transformation of the polarization, and by
   - at least one further birefringent DGD element (DGD-2) or a further birefringent variable DGD element (T-DGD-2) having a group delay $DGD_{var}$ adjustable to the transformation of the polarization,

wherein the birefringent variable DGD element or the birefringent variable DGD elements and the birefringent DGD element or the birefringent DGD elements are disposed between the emulator input and emulator output with respect to each other such that the birefringence axes at junctions at the input or output of the transformation element are twisted by a twisting angle different from zero degrees with respect to the birefringence axes at the DGD output or DGD input.

2. Emulation device according to claim 1, wherein the quotient $DGD_{var}/DGD$ is smaller than 0.5 and preferably smaller than 0.1.

3. Emulation device according to claim 1 or 2, wherein the polarization transformation element includes a plurality of birefringent variable DGD elements disposed one behind the other in the signal path.

4. Emulation device according to claim 3, wherein adjacent variable DGD elements of the plurality of variable DGD elements are disposed such that their respective birefringence axes are twisted by a twisting angle different from zero degrees relatively to each other.

5. Emulation device according to any one of the preceding claims, wherein the twisting angle is 30 degrees to 60 degrees and preferably approximately 45 degrees.

6. Emulation device according to any one of the preceding claims, wherein the DGD element includes at least a polarization maintaining light wave guide and/or at least a birefringent crystal, and the polarization transformation element includes at least a polarization maintaining light wave guide, at least a birefringent crystal and/or at least a short single-mode light wave guide.

7. Emulation device according to claim 6, wherein the polarization transformation element includes at least a mechanical adjusting element, which exerts a mechanical effect for changing $DGD_{var}$ and preferably includes a fiber squeezer and/or stretcher.

8. Emulation device according to claim 7, wherein the fiber squeezer or stretcher has a piezoelectric element, which is laterally guided by resilient vibration attenuators in a bearing housing for attenuating transverse vibrations.

9. Emulation device according to any one of claims 7 or 8, wherein the fiber squeezer or stretcher has a piezoelectric element, which is fixed to a bearing housing through a thermally compensating equalizing element such that the resulting thermal expansion coefficient of the assembly of the piezoelectric element and the equalizing element is equal to the thermal expansion coefficient of the bearing housing.

10. Emulation device according to any one of claims 7 to 9, wherein the fiber squeezer has a squeezing stamp, and a metal foil is disposed between the fiber to be squeezed and the squeezing stamp such that twisting the fiber upon slippage of the squeezing stamp is prevented.

11. Emulation device according to claim 9 or 10, wherein the polarization maintaining light wave guide of the polarization transformation element is spliced at the transformation element output to the polarization maintaining light wave guide of the DGD element at the DGD input such that the twisting angle between the birefringence axes at the transformation element output relative to those at the DGD input is unequal to zero degrees.

12. Emulation device according to any one of the preceding claims, wherein a second birefringent DGD element is disposed between the emulator input and the polarization transformation element, and a second polarization transformation element is disposed between the emulator input and the second DGD element.

13. Emulation device according to any one of the preceding claims, wherein a plurality of polarization transformation elements and DGD elements are disposed in alternating order between the emulator input and the emulator output, wherein at least one of the polarization transformation elements consists of a variable DGD element or at most two variable DGD elements oriented twisted relatively to each other.

14. Emulation device according to claim 13, wherein the emulator input side polarization transformation element consists of plural, especially at most four variable DGD elements twisted relatively to each other, and the remaining polarization transformation elements consist of a variable DGD element or at least two variable DGD elements twisted relatively to each other.

15. Compensation device for compensating distortions caused by polarization mode dispersion (PMD) in an optical transmission system including

- an emulation device according to any one of the preceding claims, wherein the emulator input is designed to input a PMD-distorted optical signal and the emulator output is designed to output an optical output signal;
- a measurement device for measuring the distortion of the optical signal caused by PMD and for outputting an measurement output signal; and
- a control device to which the measurement output signal is applied, and which controls the emulation device such that it minimizes and preferably completely compensates for the distortion caused by PMD.

16. Compensation device according to claim 15, wherein the measurement device for measuring a distortion of an optical signal caused by polarization mode dispersion (PMD) has:

- a measurement input for the optical signal;
- at least one polarizer;
- at least one polarization transformation element, which is adapted for polarization transformation of the optical signal and disposed in the signal path of the optical signal between the measurement input and the polarizer;
- at least one photo detector disposed behind the polarizer in the signal path of the optical signal, for detecting the intensity $P_{pol}$ of the optical signal; and
- a control and output means connected to the polarization transformation element and the photo detector, which controls the polarization transformation element such that the intensity $P_{pol}$ is either minimum or maximum, and outputs a measurement output signal corresponding to the minimum or maximum intensity $P_{pol,min}$ or $P_{pol,max}$ of the optical signal, respectively, as a measure of the PMD distortion of the optical signal.

17. Compensation device according to claim 16, wherein a second photo detector for detecting the total intensity $P_{tot}$ of the optical signal is provided in front of the polarization transformation element in the measurement device, and the control and output means outputs a measurement output signal corresponding to the normalized minimum or maximum intensity $P_{pol,min}/P_{tot}$ or $P_{pol,max}/P_{tot}$, respectively.

18. Compensation device according to claim 16 or 17, wherein the polarization transformation element includes at least one variable DGD element with a differential group delay $DGD_{var}$ adjustable to the transformation of the polarization in the measurement device.

19. Compensation device according to claim 18, wherein the polarization transformation element has two variable DGD elements in the measurement device, which are disposed such that the birefringence axes thereof are twisted relatively to each other by a twisting angle different from zero degrees.

20. Compensation device according to claim 18 or 19, wherein the variable DGD elements each include a polarization maintaining light wave guide and a mechanical adjusting element in the measurement device, which exerts a mechanical effect to the light wave guide for changing $DGD_{var}$ and preferably has a fiber squeezer and/or stretcher.

21. Compensation device for compensating distortions caused by polarization mode dispersion (PMD) in an optical transmission system, including

- an emulation device according to any one of the claims 1 to 14, including an emulator input for inputting a PMD-distorted optical signal and an emulator output for outputting an optical output signal, wherein the emulation device has a plurality of controllable polarization transformation elements and a plurality of DGD elements;
- a measurement device for measuring the distortion of the optical signal caused by PMD and for outputting an measurement output signal; and
- a control device to which the measurement output signal is applied, and which controls the emulation device such that it minimizes and preferably completely compensates for the distortion caused by PMD,

wherein the control device is adapted
for outputting an adjusting signal superimposed with a periodic modulation signal to the polarization transformation elements,

for detection of corresponding modulation portions in the measurement output signal correct in intensity and phase, and

for generating a new adjusting signal depending on the detected modulation portions.

22. Compensation device according to claim 21, wherein the modulation frequencies of the modulation signals are different for each polarization transformation element and are preferably in a frequency range of from 20 kHz to 500 kHz, especially preferred from 40 kHz to 150 kHz.

**Revendications**

1. Dispositif d'émulation pour émuler une dispersion de mode de polarisation (polarisation mode dispersion, PMD) d'un système de transmission optique, comportant

   - une entrée d'émulateur pour un signal optique d'entrée ;
   - au moins un élément commandable de transformation de polarisation à double réfraction comportant une entrée d'élément de transformation et une sortie d'élément de transformation qui sera conçu pour la formation de la polarisation du signal optique ;
   - au moins un élément DGD à double réfraction (DGD-1, DGD-2) comportant une entrée DGD et une sortie DGD, l'élément DGD présentant un instant de fonctionnement différentiel de groupe DGD entre deux modes polarisés de propagation orthogonaux entre eux de l'élément DGD ; et
   - une sortie d'émulateur pour un signal optique de sortie de PMD modifiée,
   **caractérisé par**
   - au moins un élément DGD variable à double réfraction (T-DGD-1, T-DGD-2) disposé dans l'élément de transformation de polarisation comportant un retard d'instant de fonctionnement différentiel de groupe réglable $DGD_{var}$ pour la transformation de la polarisation et par
   - au moins un autre élément DGD à double réfraction (DGD-2) ou un autre élément DGD variable à double réfraction (T-DGD-2) comportant un retard d'instant de fonctionnement différentiel de groupe réglable $DGD_{var}$ pour la transformation de la polarisation, l'élément DGD variable à double réfraction ou les éléments DGD variables à double réfraction et l'élément DGD à double réfraction ou les éléments DGD à double réfraction entre l'entrée d'émulateur et la sortie d'émulateur étant disposés de manière telle les uns par rapport aux autres que les axes de double réfraction sont tournés en des emplacements de liaison à l'entrée ou la sortie de l'élément de transformation d'un angle de pivotement différent de zéro degré par rapport aux axes de réfraction double à l'entrée DGD ou à la sortie DGD.

2. Dispositif d'émulation selon la revendication 1, où le quotient $DGD_{var}$ / DGD est inférieur à 0,5 et, de préférence, inférieur à 0,1.

3. Dispositif d'émulation selon la revendication 1 ou 2, où l'élément de transformation de polarisation comprend une multitude d'éléments DGD variables à double réfraction disposés les uns après les autres dans le chemin du signal.

4. Dispositif d'émulation selon la revendication 3, où les éléments DGD variables voisins de la multitude d'éléments DGD variables sont disposés de manière telle que leurs axes respectifs de double réfraction sont tournés relativement entre eux d'un angle de pivotement différent de zéro.

5. Dispositif d'émulation selon l'une quelconque des revendications précédentes, où l'angle de pivotement est compris entre 30 degrés et 60 degrés et est, de préférence, d'environ 45 degrés.

6. Dispositif d'émulation selon l'une quelconque des revendications précédentes, où l'élément DGD comprend au moins un guide d'onde lumineuse recevant une polarisation et/ou au moins un cristal à double réfraction et l'élément de transformation de polarisation au moins un guide d'onde lumineuse recevant une polarisation, au moins un cristal à double réfraction et/ou au moins un guide d'onde lumineuse monomode court.

7. Dispositif d'émulation selon la revendication 6, où l'élément de transformation de polarisation comprend au moins un élément mécanique de réglage ayant un effet mécanique pour modifier $DGD_{var}$ et, de préférence, un presseur et/ou un étireur de fibre.

8. Dispositif d'émulation selon la revendication 7, où le presseur et/ou l'étireur de fibre présentent un élément piézo-électrique qui, pour l'amortissement d'oscillations transversales, est guidé latéralement dans un boîtier de logement par des amortisseurs élastiques d'oscillations.

9. Dispositif d'émulation selon l'une quelconque des revendications 7 ou 8, où le presseur et/ou l'étireur de fibre présentent un élément piézo-électrique qui est fixé de manière telle à un boîtier de logement par un élément d'équilibrage à compensation thermique que le coefficient de dilatation thermique résultant de l'élément piézo-électrique et de l'élément d'équilibrage est égal au coefficient de dilatation thermique du boîtier de logement.

10. Dispositif d'émulation selon l'une quelconque des revendications 7 à 9, où le presseur de fibre présente un poinçon de pressage et un film de métal est disposé de manière telle entre la fibre à presser et le poinçon de pressage qu'un pivotement de la fibre lors d'un ripage du poinçon de pressage est empêché.

11. Dispositif d'émulation selon la revendication 9 ou 10, où le guide d'onde lumineuse recevant une polarisation, de l'élément de transformation de polarisation à la sortie de l'élément de transformation, est épissé de manière telle avec le guide d'onde lumineuse recevant une polarisation de l'élément DGD à l'entrée DGD que l'angle de pivotement entre les axes de double réfraction à la sortie de l'élément de transformation par rapport à ceux à l'entrée DGD est différent de zéro degré.

12. Dispositif d'émulation selon l'une quelconque des revendications précédentes, où entre l'entrée de l'émulateur et l'élément de transformation de polarisation est disposé un deuxième élément DGD de double réfraction et entre l'entrée de l'émulateur et le deuxième élément DGD est disposé un deuxième élément de transformation de polarisation.

13. Dispositif d'émulation selon l'une quelconque des revendications précédentes, où, entre l'entrée de l'émulateur et la sortie de l'émulateur, est disposée une pluralité d'éléments de transformation de polarisation et d'éléments DGD en succession alternée, où au moins l'un des éléments de transformation de polarisation se constitue d'un élément DGD variable ou, au plus, de deux éléments DGD variables orientés de façon à être tournés l'un par rapport à l'autre.

14. Dispositif d'émulation selon la revendication 13, où l'élément de transformation de polarisation côté entrée de l'émulateur se constitue de plusieurs, en particulier de quatre éléments DGD variables au plus, tournés l'un par rapport à l'autre, et les autres éléments de transformation de polarisation, d'un élément DGD variable ou d'au moins deux éléments DGD variables tournés l'un par rapport à l'autre.

15. Dispositif de compensation pour compenser les distorsions conditionnées par des dispersions de modes de polarisation (PMD) dans un système de transmission optique avec

- un dispositif d'émulation selon l'une quelconque des revendications précédentes, l'entrée de l'émulateur étant conçue pour l'introduction d'un signal optique avec distorsion PMD et la sortie de l'émulateur pour la sortie d'un signal optique de sortie ;
- un dispositif de mesure pour mesurer la distorsion du signal optique conditionnée par la PMD et sortir un signal de sortie de mesure ; et
- un dispositif de régulation auquel est appliqué le signal de sortie de mesure et qui pilote de manière telle le dispositif d'émulation que celui-ci minimise la distorsion conditionnée par la PMD et, de préférence, la compense intégralement.

16. Dispositif de compensation selon la revendication 15, où le dispositif de mesure pour mesurer une distorsion d'un signal optique conditionnée par la dispersion de modes de polarisation (PMD) présente :

- une entrée de mesure pour le signal optique ;
- au moins un polariseur ;
- au moins un élément de transformation de polarisation conçu pour la transformation de la polarisation du signal optique et disposé dans le chemin de signal du signal optique entre l'entrée de mesure et le polariseur ;
- au moins un photodétecteur disposé derrière le polariseur dans le chemin de signal du signal optique pour la détection de l'intensité $P_{pol}$ du signal optique ; et
- un dispositif de commande et de sortie relié à l'élément de transformation de polarisation et le photodétecteur, qui pilote de manière telle l'élément de transformation de polarisation que l'intensité $P_{pol}$ est soit minimale soit maximale et fournit un signal de sortie de mesure correspondant à l'intensité minimale ou maximale $P_{pol,min}$ ou $P_{pol,max}$ du signal optique en tant que mesure de la distorsion PMD du signal optique.

**17.** Dispositif de compensation selon la revendication 16, où, dans le dispositif de mesure, est prévu un deuxième photodétecteur pour la détection de l'intensité totale $P_{ges}$ du signal optique avant l'élément de transformation de polarisation et le dispositif de commande et de sortie fournit un signal de sortie de mesure correspondant à l'intensité minimale ou maximale normalisée $P_{pol,min}$ / $P_{ges}$ ou $P_{pol,max}$ / $P_{ges}$.

**18.** Dispositif de compensation selon la revendication 16 ou 17, où, dans le dispositif de mesure, l'élément de transformation de polarisation comprend au moins un élément DGD variable avec un retard d'instant de fonctionnement de groupe $DGD_{var}$ différentiel réglable pour la transformation de polarisation.

**19.** Dispositif de compensation selon la revendication 18, où, dans le dispositif de mesure, l'élément de transformation de polarisation présente deux éléments DGD variables, disposés de manière telle que leurs axes de double réfraction sont tournés d'un angle de pivotement différent de zéro l'un par rapport à l'autre.

**20.** Dispositif de compensation selon la revendication 18 ou 19, où, dans le dispositif de mesure, les éléments DGD variables comprennent chacun un guide d'onde lumineuse recevant une polarisation et un élément mécanique de réglage exerçant sur le guide d'onde lumineuse un effet mécanique pour modifier $DGD_{var}$ et présentant, de préférence, un presseur et/ou un étireur de fibre.

**21.** Dispositif de compensation pour compenser les distorsions conditionnées par des dispersions de modes de polarisation (PMD) dans un système de transmission optique avec

- un dispositif d'émulation selon l'une quelconque des revendications 1 à 14, avec une entrée d'émulateur pour l'introduction d'un signal optique avec distorsion PMD et une sortie d'émulateur pour la sortie d'un signal optique de sortie, le dispositif d'émulation présentant une pluralité d'éléments de transformation de polarisation commandables et une pluralité d'éléments DGD ;
- un dispositif de mesure pour mesurer la distorsion du signal optique conditionnée par la PMD et la sortie d'un signal de sortie de mesure ; et
- un dispositif de régulation auquel est appliqué le signal de sortie de mesure et qui pilote de manière telle le dispositif d'émulation que celui-ci minimise la distorsion conditionnée par la PMD et, de préférence, la compense intégralement,

le dispositif de régulation étant conçu
pour la sortie d'un signal de réglage superposé à un signal périodique de modulation aux éléments de transformation de polarisation,
pour la détection correcte en intensité et en phase des composantes correspondantes de modulation dans le signal de sortie de mesure et
pour générer un nouveau signal de réglage dépendant des composantes de modulation détectées.

**22.** Dispositif de compensation selon la revendication 21, où les fréquences de modulation des signaux de modulation pour chaque élément de transformation de polarisation sont différentes et figurent de préférence dans une plage de fréquences de 20 kHz à 500 kHz, de façon particulièrement préférée, de 40 kHz à 150 kHz.

T-DGD-2   T-DGD-1   DGD-1

0          45        0           abs. angle /deg

1          1         50          DGD / ps

**Fig. 1**

DGD-2      T-DGD-1   DGD-1

0          45        0           abs. angle /deg

50         1         50          DGD / ps

**Fig. 2**

T  T  DGD-4   T  T  DGD-3   T  T  DGD-2   T  T  DGD-1

45 0      45   0  45    0   45 0    45   0  45  0      abs. angle /deg

1  1      8    1  1     17  1  1    25   1  1   50     DGD / ps

**Fig. 3**

Fig. 4

Fig. 5

Fig. 6

**Fig. 7**

**Fig. 8**

Fig. 9

Fig. 10

Fig. 11

Fig. 12

EP 1 325 574 B1

Fig. 13